# EUROPEAN PATENT APPLICATION

(11) **EP 4 745 039 A1**
(43) Date of publication of application: **20.05.2026**
(21) Application number: 24842988.8
(22) Date of filing: 08.07.2024
(51) Int. Cl.: B64D 33/10, B60L 15/20, B64D 27/32, B64U 20/94, B64U 50/19, H02K 9/06, H02P 29/028

(54) **PROPULSION SYSTEM, PROPULSION CONTROL DEVICE, AND PROPULSION CONTROL PROGRAM**

(30) Priority: 14.07.2023 JP 2023116161
(71) Applicant: DENSO CORPORATION, Kariya-city, Aichi 448-8661 (JP)
(72) Inventor: SUZUKI, Hideaki, Kariya-city, Aichi 448-8661 (JP); TAKEMURA, Yuichi, Kariya-city, Aichi 448-8661 (JP)
(74) Representative: TBK
(86) International application number: PCT/JP2024/024521
(87) International publication number: WO 2025/018195

(57) **Abstract**

The motor device (60) includes a motor (61) and a motor housing (70). The motor housing (70) has a motor opening (72), a motor lid (75), a motor lid retainer (76), and a motor retainer drive device (77). The inverter device (80) has an inverter high-voltage unit (86), an inverter low-voltage section (87), and an inverter housing (90). The inverter housing (90) has an inverter opening (92), an inverter lid (95), an inverter lid retainer (96), and an inverter retainer drive device (97). The flight control device (40) drives the retainer drive device (77, 97) so that the retention of the lid (75, 95) by the lid retainer (76, 96) is released when a high-temperature abnormality occurs in the drive-heat generating device such as the motor (61), inverter high voltage unit (86), and inverter low voltage unit (87).

## Description

### CROSS REFERENCE TO RELATED APPLICATION

The present application is based on Japanese Patent Application NO. 2023-116161 filed on July 14, 2023. The entire disclosures of all of the above applications are incorporated herein by reference.

### TECHNICAL FIELD

The present disclosure relates to a propulsion system, a propulsion control device, and a propulsion control program.

### BACKGROUND ART

Patent literature 1 describes an electric vehicle. The electric vehicle is equipped with a motor, an inverter, a motor control device, and a cooler. The cooler is capable of cooling the inverter. The motor control device lowers an upper output limit of the inverter when a cooler abnormality occurs. In such manner, according to the patent literature 1, a situation in which an inverter temperature becoming too high and causing the inverter and motor to stop driving is avoidable, even when a cooler abnormality occurs.

### PRIOR ART LITERATURE

### PATENT LITERATURE

PATENT LITERATURE 1: JP2020-137157A

### SUMMARY OF INVENTION

However, in the above-described patent literature 1, the upper output limit of the inverter is lowered to suppress the temperature rise of the inverter, which is thought to reduce the degree of freedom regarding the motor drive. Therefore, there is concern that in situations where a moving object such as an electric vehicle is moving, a reduced degree of freedom regarding motor drive may make it difficult to evacuate the moving object to a safe state.

The main purpose of the present disclosure is to provide a propulsion system, a propulsion control device, and a propulsion control program that can ensure safety of a moving object even when an abnormality occurs in the propulsion system.

Disclosed aspects in this specification adopt different technical solutions from each other in order to achieve their respective objects. Further, reference numerals in parentheses in the claims and this section are an example indicating a correspondence relationship with specific means described in an embodiment to be described later as one aspect, and do not limit the technical scope.

According to an aspect of the present disclosure, a propulsion system is configured to propel a moving object. The propulsion system includes: a motor configured to be driven to propel the moving object; a drive-heat generating device configured to generate heat as the motor is driven; a drive housing accommodating the drive-heat generating device; a housing lid capable of opening a housing opening of the drive housing; a lid retainer configured to hold the housing lid in a closed state in which the housing lid covers the housing opening; and a lid releaser configured to release retention of the housing lid by the lid retainer on occurrence of a high-temperature abnormality, the high-temperature abnormality including a state in which temperature of the drive-heat generating device reaches a predetermined temperature.

According to the above configuration, the housing lid is opened by releasing the retention of the housing lid by the lid retainer upon the occurrence of the high-temperature abnormality in the drive-heat generating device. In such configuration, the housing lid is opened to allow direct cooling of the drive-heat generating device by outside air flowing in through the housing opening. Therefore, immediate stopping of the motor drive due to high-temperature abnormality of the drive-heat generating device, or reduction of a degree of freedom of the motor drive due to high-temperature abnormality of the drive-heat generating device is preventable. Thus, even when a high-temperature abnormality occurs in the drive-heat generating device, the motor drive is continuable until the moving object is evacuated to a safe state. As described above, the safety of the moving object is ensured even when abnormalities occur in the propulsion system.

According to another aspect of the present disclosure, a propulsion control device is configured to control a propulsion system. The propulsion system includes: a motor configured to be driven to propel the moving object; a drive-heat generating device configured to generate heat as the motor is driven; a drive housing accommodating the drive-heat generating device; a housing lid capable of opening a housing opening of the drive housing; a lid retainer configured to hold the housing lid in a closed state in which the housing lid covers the housing opening; and a retainer drive device configured drive the lid retainer to displace the lid retainer. The propulsion control device comprises: a high temperature determination unit configured to determine whether a high-temperature abnormality occurs, the high-temperature abnormality including a state in which temperature of the drive-heat generating device reaches a predetermined temperature; and a release execution unit configured to, when the high-temperature abnormality occurs, drive the retainer drive device to transition the lid retainer to be in a released state in which retention of the housing lid is released.

According to the above-described propulsion control device, similar to the above-described propulsion system, the safety of a flight vehicle can be ensured even when an abnormality occurs in the propulsion system.

According to another aspect of the present disclosure, a propulsion control program is for controlling a propulsion system. The propulsion system includes: a motor configured to be driven to propel the moving object; a drive-heat generating device configured to generate heat as the motor is driven; a drive housing accommodating the drive-heat generating device; a housing lid capable of opening a housing opening of the drive housing; a lid retainer configured to hold the housing lid in a closed state in which the housing lid covers the housing opening; and a retainer drive device configured drive the lid retainer to displace the lid retainer. The program is configured to cause at least one processor to: determine whether a high-temperature abnormality occurs, the high-temperature abnormality including a state in which temperature of the drive-heat generating device reaches a predetermined temperature; and when the high-temperature abnormality occurs, drive the retainer drive device to transition the lid retainer to be in a released state in which retention of the housing lid is released.

According to the above-described propulsion control program, similar to the above-described propulsion system, the safety of the flight vehicle can be ensured even when an abnormality occurs in the propulsion system.

### BRIEF DESCRIPTION OF THE DRAWINGS

FIG. 1 is a diagram of a configuration of an eVTOL according to a first embodiment.
FIG. 2 is a block diagram of an electrical configuration of a propulsion system.
FIG. 3 is a schematic longitudinal section of an inverter housing when an inverter lid is in a closed state.
FIG. 4 is a schematic longitudinal section of the inverter housing when the inverter lid is in an open state.
FIG. 5 is a flowchart of a flight control process.
FIG. 6 is a flowchart of procedures of the flight control process in a second embodiment.
FIG. 7 is a block diagram of the electrical configuration of the propulsion system in a third embodiment.
FIG. 8 is a schematic longitudinal section of the inverter housing when the inverter lid is in the closed state.
FIG. 9 is a schematic longitudinal section of the inverter housing when the inverter lid is in the open state.
FIG. 10 is a flowchart of the flight control process.
FIG. 11 is a block diagram of the electrical configuration of the propulsion system in a fourth embodiment.

### DESCRIPTION OF EMBODIMENTS

Hereinafter, embodiments for implementing the present disclosure will be described referring to drawings. In each embodiment, parts corresponding to the elements described in the preceding embodiments are denoted by the same reference numerals, and redundant explanation may be omitted. When only a part of the configuration is described in each embodiment, previously-described other embodiment may be applied to the other parts of such configuration. It may be possible not only to combine parts the combination of which is explicitly described in an embodiment, but also to combine parts of respective embodiments the combination of which is not explicitly described if any obstacle does not especially occur in combining the parts of the respective embodiments.

### <First Embodiment>

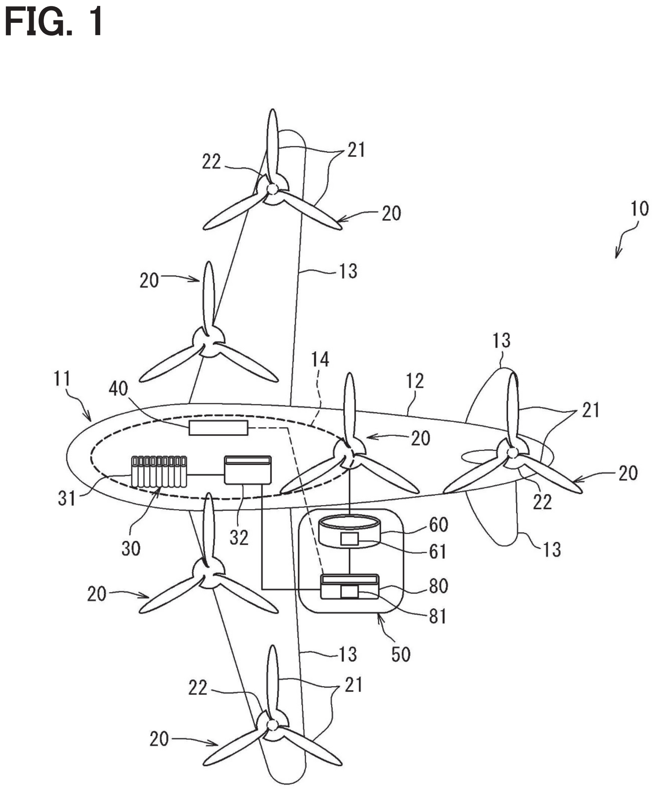

A propulsion system 30 shown in FIG. 1 is mounted in an eVTOL 10. The eVTOL 10 is an electric vertical takeoff and landing aircraft. The electric vertical takeoff and landing aircraft is an electrically-powered vertical takeoff and landing aircraft, and can take off and land vertically. The eVTOL is an abbreviation of an electric vertical takeoff and landing aircraft. The eVTOL 10 is an electrically-powered flight vehicle that flies through the atmosphere and may be referred to as an electric flight vehicle. The eVTOL 10 is also an electrically-powered aircraft and may be referred to as an electric aircraft. The eVTOL 10 is a manned flight vehicle carrying an occupant. The occupant of the eVTOL 10 includes a pilot acting as an operator or a driver. The propulsion system 30 is a system that is driven to propel the eVTOL 10. The propulsion system 30 may be referred to as a flight system.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has an occupant compartment 14 for carrying occupants. Each of the wings 13 extends from the airframe main body 12 and multiple wings 13 are provided on the airframe main body 12. The wings 13 are fixed wings. The multiple wings 13 include a main wing, a tail wing, and the like.

The eVTOL 10 has a cabin. The cabin is provided inside the eVTOL 10. For example, the cabin is an internal space of the airframe main body 12 and is formed by the airframe main body 12. Examples of the cabin include the occupant compartment 14, a cargo compartment, and the like. Examples of the occupant compartment 14 include a passenger compartment, a pilot compartment and the like. Seats for the occupants to sit are provided in the occupant compartment 14. The occupant compartment 14 may be not occupied by the occupants, and may house cargo.

Multiple propellers 20 are provided on the airframe 11. The eVTOL 10 is a multi-copter including at least three propellers 20. For example, there are at least six propellers 20 on the airframe 11. The propellers 20 are provided on the airframe main body 12 and the wings 13. Each of the propellers 20 rotates about a propeller axis. The propeller axis is, for example, a center line of the propeller 20. The propeller 20 can generate thrust and lift in the eVTOL 10. The propeller 20 may be referred to as a rotor or a rotary wing.

In the eVTOL 10, by providing multiple propellers 20, balance of the airframe is easily maintained. In the eVTOL 10, even when propeller output is unintentionally reduced in one propeller 20, flight can be continued by using the remaining propellers 20. Examples of the propeller output include a rotation speed, a torque and the like of the propeller 20.

The propeller 20 includes blades, a boss, and a propeller shaft. The blades are arranged in a circumferential direction of the propeller axis. The boss couples the multiple blades. The propeller shaft is a rotating shaft of the propeller 20, and extends along the propeller axis from the boss.

Examples of a flight mode of the eVTOL 10 include vertical takeoff, vertical landing, cruise, hovering and the like. The flight mode may be referred to as a flight manner. In the vertical takeoff, the eVTOL 10 can take off without sliding. In the vertical takeoff, the eVTOL 10 may ascend in a vertical direction, or may ascend obliquely upward. In the vertical landing, the eVTOL 10 can land without sliding. In the vertical landing, the eVTOL 10 may descend in the vertical direction or may descend obliquely downward.

The cruise may be referred to as horizontal flight. In the cruise, the eVTOL 10 may fly in a horizontal direction without moving in an up-down direction, or may fly in the horizontal direction while moving in the up-down direction. The hovering may be referred to as stationary flight. In the hovering, the eVTOL 10 may fly as if stopping at a predetermined position in the air, or the eVTOL 10 may deviate from the predetermined position in the up-down direction or the horizontal direction.

Further, the flight mode of the eVTOL 10 includes lift. In the lift, the eVTOL 10 moves in the up-down direction. As the lift, the eVTOL 10 may ascend obliquely upward or may descend obliquely downward. The eVTOL 10 takes off vertically when lifting upward. The eVTOL 10 lands vertically when lifting downward.

The eVTOL 10 is a tilt-rotor aircraft. In the eVTOL 10, a tilt angle of the propeller 20 is adjustable. In the eVTOL 10, one propeller 20 can function as both of a lift propeller and a cruise propeller. For example, when the eVTOL 10 is to lift, the tilt angle is adjusted such that the propeller 20 functions as a lift rotor. When the eVTOL 10 is to cruise, the tilt angle is adjusted such that the propeller 20 functions as a cruise rotor. Note that the eVTOL 10 may be not a tilt-rotor aircraft. For example, the eVTOL 10 may separately include the lift-propeller 20 and the cruise-propeller 20.

The eVTOL 10 includes a battery 31, a distributor 32, a communication unit 34, a flight control device 40, and EPUs 50. The battery 31, the distributor 32, the communication unit 34, the flight control device 40, and the EPU 50 are included in the propulsion system 30. Note that the propulsion system 30 may include the flight control device 40 and the EPU 50, at least. The flight control device 40 may be referred to as a flight control device.

The battery 31 is power-suppliably connected to the EPUs 50. The battery 31 is a power supply that supplies electric power to the EPUs 50, and corresponds to a power supply unit. The battery 31 is a DC voltage source that applies a DC voltage to the EPUs 50. The battery 31 has a rechargeable secondary battery. Examples of the secondary battery include a lithium-ion battery, a nickel-hydrogen battery and the like. The battery 31 can store electric power, and corresponds to a power storage device. Note that, in addition to or instead of the battery 31, a fuel cell, a generator, or the like may be used as the power supply unit.

The distributor 32 is electrically connected to the battery 31 and multiple EPUs 50. The distributor 32 distributes the electric power from the battery 31 to the multiple EPUs 50. The battery 31 is electrically connected to the multiple EPUs 50 via the distributor 32. The battery 31 supplies the electric power to the EPUs 50 via the distributor 32.

The communication unit 34 is a communication device capable of performing wireless communication with an external device. The external device is a device located at a position away from the eVTOL 10. Examples of the external device include a communication device provided in an external facility on the ground, a communication device provided in another flight vehicle and the like. Examples of the external facility include a control center, a management center and the like. The communication unit 34 can communicate with the flight control device 40. The communication unit 34 is connected to the flight control device 40 so as to be capable of performing wired communication. Note that the communication unit 34 may wirelessly communicate with the flight control device 40.

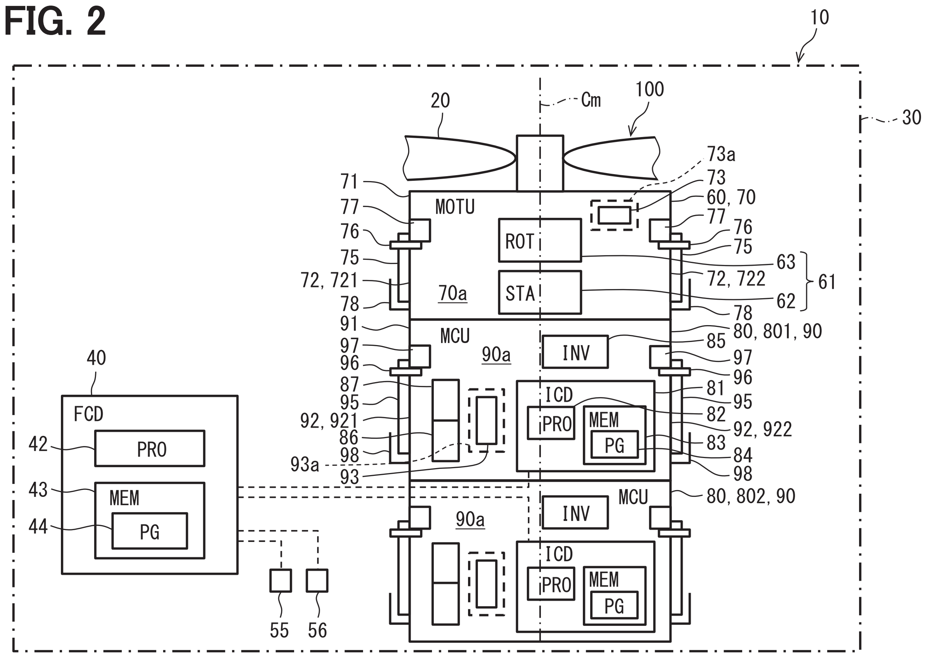

In FIGs. 1 and 2, each of the EPUs 50 is a device for driving the propeller 20 to rotate, and corresponds to a drive device. The EPU is an abbreviation of an electric propulsion unit. The EPU 50 may be referred to as an electric drive device or an electric drive system. The EPU 50 is provided individually for each of the multiple propellers 20. The EPU 50 is aligned with the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween.

As shown in FIG. 2, the eVTOL 10 includes a propulsion device 100. The propulsion device 100 includes the propeller 20 and the EPU 50. The propulsion device 100 is a device for propelling the eVTOL 10. The propulsion device 100 rotates the propeller 20 to cause the eVTOL 10 to fly. The eVTOL 10 is also a moving object that moves using the propulsion device 100. Multiple propulsion devices 100 are provided in the eVTOL 10. One propulsion device 100 includes one propeller 20 and one EPU 50 to drive the propeller 20. Note that only the EPU 50 among the propeller 20 and the EPU 50 may be referred to as the propulsion device 100.

The EPU 50 includes a motor device 60 and an inverter device 80. The motor device 60 includes a motor 61 and a motor housing 70. The motor housing 70 is a case and houses the motor 61. The motor housing 70 has a motor space 70a. The motor space 70a is an internal space of the motor housing 70.

The motor 61 is a multi-phase AC motor. The motor 61 is a rotary electric machine of a multi-phase AC type. The motor 61 is a flight driving source of the eVTOL 10, and functions as an electric motor. The motor 61 drives and rotates the propeller 20 to enable the eVTOL 10 to fly. The motor 61 is a flight-motor causing the eVTOL 10 to fly. The EPU 50 drives the propeller 20 to rotate by driving the motor 61. As the motor 61, for example, a brushless motor is used.

The motor 61 includes a motor stator 62 and a motor rotor 63. The motor 61 includes the motor stator 62. The motor stator 62 is a stator, and is fixed to the motor housing 70. The motor rotor 63 is rotated relative to the motor stator 62. Rotation of the motor rotor 63 may be referred to as rotation of the motor 61. The motor 61 is, for example, an axial gap-type motor. In the motor 61, the motor stator 62 and the motor rotor 63 are aligned in an axial direction AD. The motor 61 is, for example, a double-rotor motor. The motor 61 has two motor rotors 63. In the motor 61, two motor rotors 63 are aligned in the axial direction AD through the motor stator 62. The motor 61 includes a motor shaft that rotates together with the motor rotor 63. The motor shaft is rotatably supported by the motor housing 70 and the like.

The axial direction AD is a direction in which a motor axis Cm extends. The motor axis Cm is an axis of rotation of the motor rotor 63. The motor rotor 63 rotates about the motor axis Cm. The motor axis Cm is ta centerline of the motor rotor 63. The motor axis Cm is sometimes referred to as an axis of rotation. Regarding the motor axis Cm, the axial direction AD, a circumferential direction CD, and a radial direction RD are orthogonal to one another. Note that an outer side in the radial direction RD may be referred to as a radially-outer side or an outer peripheral side. An inner side in the radial direction RD may be referred to as a radially-inner side or an inner peripheral side.

The motor 61 is driven when electric power is supplied to the motor stator 62. The motor stator 62 includes a stator coil. The stator coil is a multi-phase coil. The stator coil forms an armature. When the electric power is supplied to the motor stator 62, an electric current flows through the stator coil, and thus the motor rotor 63 is rotated. The motor rotor 63 has rotor magnets such as permanent magnets. The rotor magnets form field magnet. Driving the motor 61 to rotate the motor rotor 63 may be referred to as rotational drive of the motor 61. The rotational drive of the motor 61 may be simply referred to as drive of the motor 61.

The inverter device 80 supplies electric power to the motor device 60 to drive the motor device 60. The inverter device 80 is a driving unit for driving the motor 61, and corresponds to a motor driving unit. The inverter device 80 includes an inverter circuit 85 and an inverter housing 90. The inverter circuit 85 converts the electric power to be supplied to the motor 61. The inverter circuit 85 may be referred to as an inverter, a power conversion unit, or a control circuit. The inverter circuit 85 performs power conversion for each of the multiple phases. The motor 61 is driven in response to a voltage or an electric current supplied from the inverter circuit 85.

The inverter housing 90 is a case, and houses the inverter circuit 85 and an inverter control unit 81 which is to be described later. The inverter housing 90 has an inverter space 90a. The inverter space 90a is an internal space of the inverter housing 90.

The inverter device 80 includes the inverter control unit 81. The inverter control unit 81 performs motor control via the inverter circuit 85. The motor control is control for driving the motor 61. The inverter control unit 81 performs propulsion control. The propulsion control is control for driving the propulsion device 100. The propulsion control includes the motor control. The propulsion control is also control for controlling the EPU 50, and may be referred to as EPU control.

The inverter control unit 81 includes, for example, an ECU. The ECU is an abbreviation of an electronic control unit. The inverter control unit 81 includes a processor 82, a memory 83, and a program 84. The inverter control unit 81 is mainly implemented by a computer. The computer includes the processor 82, the memory 83, an input/output interface, and a bus connecting these components, together with other components. The memory 83 stores the program 84. The program 84 is a program for performing the propulsion control. The program 84 corresponds to a propulsion control program.

The processor 82 is hardware for performing an arithmetic process coupled to the memory 83. The processor 82 executes various processes by accessing the memory 83. The memory 83 is a storage medium that stores a control program and the like. For example, the memory 83 is a non-transitory, tangible storage medium that non-temporarily stores computer readable programs and data. The non-transitory, tangible storage medium is implemented by a semi-conductor memory, a magnetic disk, or the like. The program 84 includes computer-readable instructions that cause the processor 82 to perform various functions. The processor 82 is a processing unit that executes a predetermined process by executing the instructions in the program 84.

The inverter control unit 81 performs the motor control in response to a requested output. The requested output is a motor output requested to the inverter control unit 81. Examples of the requested output include a requested torque requested for an output torque. The requested output is included in an instruction signal or the like that the flight control device 40 outputs to the inverter control unit 81. The inverter control unit 81 adjusts the motor output according to the requested output. The requested output or the required torque may be referred to as a target output or a target torque. As the motor output, a torque, an electric current, a voltage, a motor rotation speed, or the like may be used.

The inverter control unit 81 performs the motor control using the instruction signal from the flight control device 40, detection signals from various sensors, and the like. The various sensors are communicably connected to the inverter control unit 81. Various sensors include a motor sensor and an inverter sensor. The battery sensor is a sensor provided in the motor device 60. The inverter sensor is a sensor provided in the inverter device 80.

The flight control device 40 is communicably connected to the inverter control unit 81. The flight control device 40 and the inverter control unit 81 may perform wireless communication. The flight control device 40 performs integrated control to integrate drive of the multiple propulsion devices 100. In the integrated control, the propulsion control performed by each of the multiple inverter control units 81 is integrated. The flight control device 40 performs flight control. The flight control is control for causing the eVTOL 10 to fly. As the flight control, the flight control device 40 controls the propulsion system 30 and the EPU 50. The flight control is a control for propelling the eVTOL 10, and may be referred to as a propulsion control. The flight control device 40 corresponds to a propulsion control device.

The flight control device 40 includes, for example, an ECU. The flight control device 40 includes a processor 42, a memory 43, and a program 44. The flight control device 40 is implemented by using, as a main component, a computer. The computer includes the processor 42, the memory 43, an input/output interface, a bus connecting these components and the like. The memory 43 stores the program 44. The program 44 is a program for performing the flight control.

The processor 42 is hardware for performing an arithmetic process coupled to the memory 43. The processor 42 executes various processes by accessing the memory 43. The memory 43 is a storage medium that stores a control program and the like. For example, the memory 43 is a non-transitory, tangible storage medium that non-temporarily stores computer readable programs and data. The program 44 includes computer-readable instructions that cause the processor 42 to perform various functions. The processor 42 is a processing unit that performs a predetermined process by executing the instructions in the program 44.

The flight control device 40 outputs information required for the propulsion control to the inverter control unit 81. The flight control device 40 performs motor control via the inverter control unit 81. The flight control device 40 is a host ECU for the inverter control unit 81. The flight control device 40 individually controls the multiple propulsion devices 100 according to the flight mode or the like of the eVTOL 10. The flight control device 40 is capable of individually adjusting, for each of the propulsion devices 100, an output of the propulsion device 100. For example, the flight control device 40 outputs the requested output to each of the multiple propulsion devices 100. The requested output is an output requested to the propulsion device 100. The requested output includes the requested torque requested for the motor 61. As the requested output, the torque, the electric current, the voltage, the motor rotation speed, or the like may be used.

The flight control device 40 performs the flight control according to a flight state of the eVTOL 10, detection signals from various sensors, and the like. Examples of the flight state of the eVTOL 10 include a flight mode and a flight attitude of the eVTOL 10. The various sensors are communicably connected to the flight control device 40. Various sensors include EPU sensors and battery sensors. The EPU sensor is a sensor provided on the EPU 50. The battery sensor is a sensor provided on the battery 31, such as a temperature sensor and the like.

EPU sensors include a temperature sensor 55 and a current sensor 56. The temperature sensor 55 and the current sensor 56 are provided for each of the multiple propulsion devices 100. The temperature sensor 55 is provided in the EPU 50. The temperature sensor 55 is provided in the motor device 60 and the inverter device 80. The temperature sensor 55 detects the temperature of the EPU 50. The temperature of the EPU 50 includes the temperature of the motor device 60 and the temperature of the inverter device 80. For example, the temperature sensor 55 detects the temperature of the motor stator 62 and the motor rotor 63 as the temperature of motor device 60. Further, the temperature sensor 55 detects the temperature of a part forming the inverter circuit 85 and the temperature of a part forming the inverter control unit 81 as the temperature of the inverter device 80. At least one temperature sensor 55 is provided in the EPU 50.

The temperature sensor 55 is communicably connected to the flight control device 40. The temperature sensor 55 outputs a detection signal to the flight control device 40 according to the temperature of the EPU 50. The flight control device 40 calculates an EPU temperature Tepu using the detection signal of the temperature sensor 55. The EPU temperature Tepu is the temperature of EPU 50.

The current sensor 56 is provided in EPU 50. The current sensor 56 is provided in the motor device 60 and the inverter device 80. The current sensor 56 detects a motor current. The motor current is an electric current flowing in the motor 61. For example, a motor current is the electric current flowing in the motor coil. The current sensor 56 is communicably connected to the flight control device 40. The current sensor 56 outputs a detection signal to the flight control device 40 in response to an electric current flowing in the motor 61. The flight control device 40 calculates the motor current using the detection signal of the current sensor 56.

Note that the temperature sensor 55 and the current sensor 56 may be communicably connected to the inverter control unit 81. In such configuration, the detection signals of the temperature sensor 55 and the current sensor 56 may be input to the flight control device 40 via the inverter control unit 81. Further, in such configuration, the inverter control unit 81 may calculate the EPU temperature Tepu and the motor current using the detection signals of the temperature sensor 55 and the current sensor 56, and may output, to the flight control device 40, signals including the EPU temperature Tepu and the motor current.

In the present embodiment, the propulsion device 100 includes multiple inverter devices 80. For example, the propulsion device 100 includes a first inverter device 801 and a second inverter device 802 as the inverter device 80.

In the propulsion device 100, both of the inverter devices 801 and 802 control the motor 61. In each of the inverter devices 801 and 802, the inverter circuit 85 supplies the electric power to the motor stator 62. Further, in each of the inverter devices 801 and 802, the inverter control unit 81 performs the motor control. The motor 61 is a motor of 2 × n phases. A parameter n is a natural number. One of the inverter devices 801 and 802 drives the motor of n phases and the other drives the motor of the remaining n phases. For example, the motor 61 includes coils of 2 × n phases, as motor coils. In the inverter devices 801 and 802, one inverter circuit 85 supplies electric power to the coils of n phases, and the other inverter circuit 85 supplies electric power to the coils of remaining n phases.

In FIG. 2, the motor device 60 is illustrated as MOTU, the motor stator 62 is illustrated as STA, and the motor rotor 63 is illustrated as ROT. Further, the inverter device 80 is illustrated as MCU, the inverter circuit 85 is illustrated as INV, and the inverter control unit 81 is illustrated as ICD. The processor 82 is illustrated as PRO, the memory 83 is illustrated as MEM, and the program 84 is illustrated as PG. The flight control device 40 is illustrated as FCD, the processor 42 is illustrated as PRO, the memory 43 is illustrated as MEM, and the program 44 is illustrated as PG.

The inverter device 80 includes an inverter high-voltage unit 86 and an inverter low-voltage unit 87. The inverter high-voltage unit 86 is a portion or a component in the inverter device 80 to which a driving voltage is applied. The driving voltage is a voltage for driving the motor 61. For example, the driving voltage is applied to the inverter circuit 85 as a high voltage. The driving voltage is a voltage higher than a control voltage to be described later. The driving voltage is a voltage applied to the inverter high-voltage unit 86 along with the power supply from the battery 31 to the motor 61. The driving voltage is applied to the motor coil and other components via the inverter circuit 85.

In the inverter device 80, the inverter high-voltage unit 86 is a portion through which an electric current flows as the driving voltage is applied. The inverter high-voltage unit 86 includes high-voltage wiring such as busbars that form the current path to the inverter circuit 85, terminal components to which the high-voltage wiring is connected, semiconductor components that form the inverter circuit 85, capacitor components connected to the inverter circuit 85 and the like.

The inverter low-voltage unit 87 is a portion or a component in the inverter device 80 to which a control voltage is applied. The control voltage is a voltage for controlling the drive of the motor 61. For example, the control voltage is applied to the inverter control unit 81 as a low voltage. Examples of the inverter low-voltage unit 87 include electronic components such as circuit boards forming the inverter control unit 81, low-voltage wiring such as communication lines, terminal components to which the low-voltage wiring is connected, sensor components forming various sensors and the like. The inverter low-voltage unit 87 is a portion for controlling the drive of the motor 61 in the inverter device 80. The inverter low-voltage unit 87 corresponds to a control circuit.

In the propulsion device 100, at least part of the inverter device 80 generates heat as the motor 61 is driven. At least part of the inverter device 80 corresponds to a drive-heat generating device that generates heat as the motor 61 is driven. The drive-heat generating device includes the inverter high-voltage unit 86 and the inverter low-voltage unit 87. In the inverter device 80, the inverter high-voltage unit 86 and the inverter low-voltage unit 87 generate heat when an electric current flows therethrough. In the inverter device 80, the higher the motor current is, a greater amount of heat is likely to be generated in the inverter high-voltage unit 86.

The drive-heat generating device includes parts that form the inverter circuit 85 and parts that form the inverter control unit 81 in the inverter device 80. The drive-heat generating device includes the parts of the inverter device 80 that are most likely to generate heat, the parts that are most likely to have high temperature, the parts that are most vulnerable to heat, and the like.

In the inverter device 80, at least part of the inverter high-voltage unit 86 and at least part of the inverter low-voltage unit 87 may generate heat as the motor 61 is driven. In such configuration, at least part of the inverter high-voltage unit 86 and at least part of the inverter low-voltage unit 87 correspond to a drive-heat generating device.

The inverter housing 90 houses the inverter high-voltage unit 86 and the inverter low-voltage unit 87 as a drive-heat generating device. The inverter housing 90 corresponds to a drive housing. The inverter housing 90 has an inverter outer wall 91. The inverter outer wall 91 forms an outer surface and an inner surface of the inverter housing 90. The inverter outer wall 91 is made of a metal material or the like. The inverter outer wall 91 houses the inverter high-voltage unit 86 and the inverter low-voltage unit 87.

The inverter device 80 includes an inverter vent 93 and an inverter vent filter 93a. The inverter vent 93 is located on an outer surface of the inverter outer wall 91. The inverter vent 93 is formed by vent holes in the inverter outer wall 91. The vent holes penetrate the inverter outer wall 91 in the radial direction RD and the axial direction AD. The inverter vent 93 opens the inverter space 90a to an outside of the inverter outer wall 91. In the inverter device 80, the inverter space 90a is vented through the inverter vent 93. The inverter vent 93 corresponds to a housing vent.

A plurality of inverter vents 93 are provided in the inverter device 80. For example, the two inverter vents 93 are aligned in the circumferential direction CD or in the axial direction AD through at least one of the inverter high-voltage unit 86 and the inverter low-voltage unit 87. In such configuration, when outside air flows into the inverter space 90a from at least one inverter vent 93 and flows out of the inverter housing 90 from the other one of the inverter vents 93, heat from the inverter high-voltage unit 86 and the inverter low-voltage unit 87 is easily transferred to the outside air. The outside air is air or other gases. The gases in the inverter space 90a, along with heat, flow out of the inverter vents 93 to the outside to dissipate heat from the inverter high-voltage unit 86 and the inverter low-voltage unit 87.

The inverter vent filter 93a regulates water, debris, and other foreign matter from entering the inverter space 90a through the inverter vent 93. The inverter vent filter 93a corresponds to a foreign matter regulator. The inverter vent filter 93a is formed in the form of a sheet, and the inverter vent filter 93a is fixed to the inverter outer wall 91 in a state of covering the inverter vent 93. The inverter vent filter 93a is fixed to the outer or inner surface of the inverter outer wall 91. The inverter vent filter 93a is provided for each of the multiple inverter vents 93.

The inverter outer wall 91 is provided with an inverter opening 92. The inverter opening 92 is an opening formed in the inverter outer wall 91. The inverter opening 92 is located in a position opposite to at least part of the inverter high-voltage unit 86 and at least part of the inverter low-voltage unit 87. In other words, the inverter opening 92 is located in a position that allows at least part of the inverter high-voltage unit 86 and at least part of the inverter low-voltage unit 87 to be exposed to the outside of the inverter housing 90. For example, the inverter opening 92 is located in line with at least part of the inverter high-voltage unit 86 and at least part of the inverter low-voltage unit 87 in the radial direction RD. Note that the inverter opening 92 may be located in a position that is displaced in the axis direction AD relative to the inverter high-voltage unit 86 or the inverter low-voltage unit 87. The inverter opening 92 leads to the inverter space 90a. An opening area size of the inverter opening 92 is larger than an opening area size of the inverter vent 93. The inverter opening 92 corresponds to a housing opening.

The inverter opening 92 is aligned with the inverter vent 93 and the inverter vent filter 93a along the outer surface of the inverter outer wall 91. The inverter opening 92 is located away from the inverter vent 93 and the inverter vent filter 93a in a direction that the outer surface of the inverter outer wall 91 extends. The inverter vent filter 93a does not cover the inverter opening 92.

A plurality of inverter openings 92 are provided in the inverter outer wall 91. The plurality of inverter openings 92 includes a first inverter opening 921 and a second inverter opening 922. The first inverter opening 921 and the second inverter opening 922 are aligned in the radial direction RD through at least one of the inverter high-voltage unit 86 and the inverter low-voltage unit 87. For example, the first inverter opening 921 and the second inverter opening 922 are aligned in the radial direction RD through the motor axis Cm. The first inverter opening 921 corresponds to a first opening and the second inverter opening 922 corresponds to a second opening.

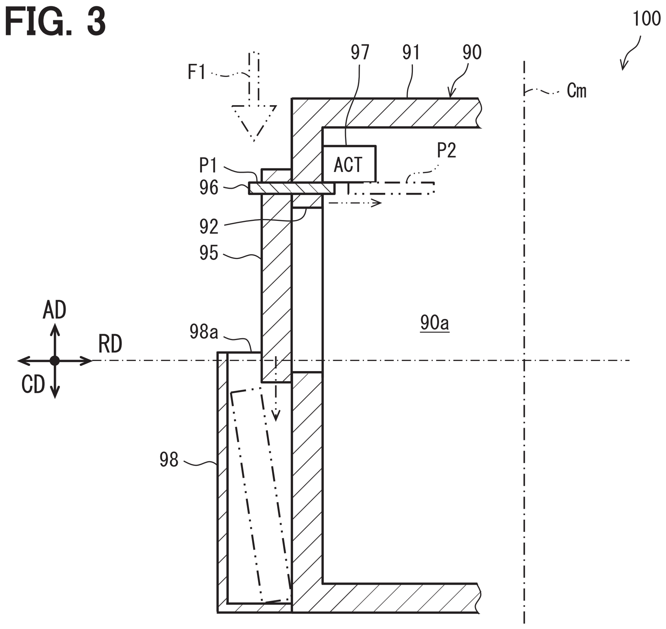

As shown in FIGs. 2 and 3, the inverter device 80 has an inverter lid 95, an inverter lid retainer 96, an inverter retainer drive device 97, and an inverter lid housing 98. The inverter lid 95, the inverter lid retainer 96, the inverter retainer drive device 97, and the inverter lid housing 98 are provided for the inverter opening 92. For example, the inverter lid 95, the inverter lid retainer 96, the inverter retainer drive device 97, and the inverter lid housing 98 are provided for each of the first and second inverter openings 921 and 922, respectively.

The inverter lid 95 is a lid that covers the inverter opening 92. The inverter lid 95 is made of a metal material or the like. The inverter lid 95 can open the inverter opening 92. The inverter lid 95 can transition between an open state for opening the inverter opening 92 and a closed state for closing the inverter opening 92. The inverter lid 95 corresponds to a housing lid.

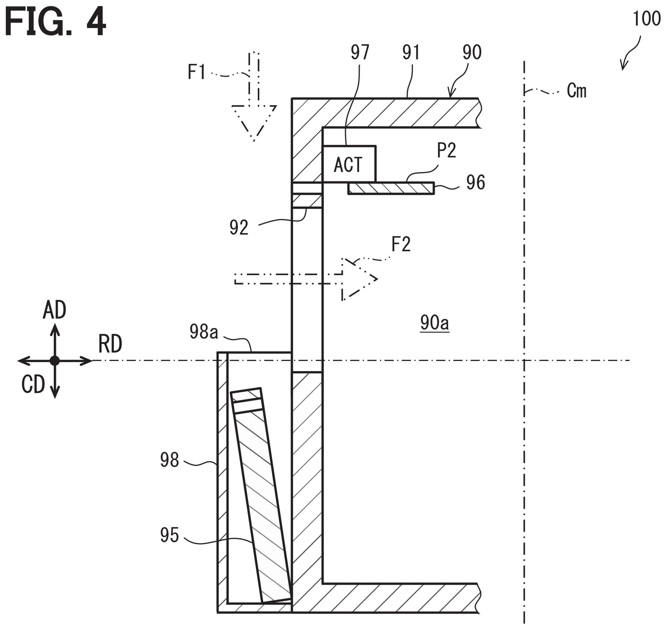

The inverter lid retainer 96 holds the inverter lid 95 in the closed state. The inverter lid retainer 96 is formed of a metallic material or the like. As shown in FIGs. 3 and 4, the inverter lid retainer 96 is displaceable to a hold position P1 and a release position P2. The inverter lid retainer 96 holds the inverter lid 95 in the closed state when in the hold position P1 (see FIG. 3). The inverter lid retainer 96 moves the inverter lid 95 to the open state by displacing it to the release position P2 (see FIG. 4). The release position P2 is for releasing the retention of the inverter lid 95 by the inverter lid retainer 96.

The inverter lid retainer 96 is in a hold state by being in the hold position P1. The inverter lid retainer 96 is in a released state by being in the release position P2. The inverter lid retainer 96 is capable of transition between a hold state and a released state. The released state is a state for releasing the retention of the inverter lid 95 by the inverter lid retainer 96. The inverter lid retainer 96 corresponds to a lid retainer.

The inverter lid retainer 96 detachably fixes the inverter lid 95 to the inverter outer wall 91. When the inverter lid retainer 96 is in the hold position P1, the inverter lid 95 is in the closed state by being fixed to the inverter outer wall 91 by the inverter lid retainer 96. When the inverter lid retainer 96 is in the release position P2, the inverter lid 95 is in the open state by being detached from the inverter outer wall 91. The inverter lid retainer 96 corresponds to a lid retainer.

When the inverter lid 95 is in the open state, at least part of the inverter high-voltage unit 86 and at least part of the inverter low-voltage unit 87 are exposed to the outside of the inverter housing 90 through the inverter opening 92. In such case, the inverter opening 92 allows ventilation of the inverter space 90a, and heat from the inverter high-voltage unit 86 and the inverter low-voltage unit 87 is easily dissipated to the outside through the inverter opening 92. The heat dissipation effect by the inverter opening 92 is higher than that by the inverter vent 93. The reasons for such effect include the fact that the inverter opening 92 is configured in such a way that a ventilation amount of the inverter opening 92 is likely to be greater than a ventilation amount of the inverter vent 93. The configuration regarding the above includes: an opening area size of the inverter opening 92 is greater than an opening area size of the inverter vent 93, and the inverter vent filter 93a is not provided in the inverter opening 92.

When the inverter lid 95 is in the open state at both of the first and second inverter openings 921 and 922, the inverter space 90a is more easily vented than when the inverter lid 95 is in the open state at only one of them. For example, outside air can easily flow in through one of the inverter openings 921 and 922, and the outside air can easily flow out through the inverter space 90a from the other of the inverter openings 921 and 922. In other words, a path of the outside air is easily formed for passing through an inside of the inverter housing 90.

The inverter retainer drive device 97 is a drive unit for opening the inverter lid 95. The inverter retainer drive device 97 comprises an actuator such as an electric motor. The inverter retainer drive device 97 is fixed to the inverter housing 90. The inverter retainer drive device 97 drives to displace the inverter lid retainer 96. The inverter retainer drive device 97 displaces the inverter lid retainer 96 from the hold position P1 to the release position P2, thereby transitioning the inverter lid 95 from the closed state to the open state. The inverter retainer drive device 97 corresponds to a retainer drive device.

The inverter retainer drive device 97 is communicably connected to the flight control device 40. The inverter retainer drive device 97 is driven in response to signals from the flight control device 40. The inverter retainer drive device 97 may be communicably connected to the inverter control unit 81. In such configuration, signals from the flight control device 40 may be input to the inverter retainer drive device 97 via the inverter control unit 81.

The inverter lid housing 98 is located on an outside of the inverter outer wall 91. The inverter lid housing 98 can house the inverter lid 95, which is detached from the inverter outer wall 91. The inverter lid housing 98 has a lid housing opening 98a. The lid housing opening 98a is an opening that opens an internal space of the inverter lid housing 98. The inverter lid 95, when detached from the inverter outer wall 91 during transitioning to the open state, enters the lid housing opening 98a to be housed in the inverter lid housing 98.

In the propulsion device 100, a propeller wind F1 is generated as the propeller 20 rotates. The propeller wind F1 is a flow of air, such as outside air, flowing in the axial direction AD. The inverter lid housing 98 is located downwind of the propeller wind F1 with respect to the inverter lid 95 in the closed state. The inverter lid housing 98 is aligned in the axial direction AD with the inverter lid 95. The lid housing opening 98a is in the open state toward an upwind side of the propeller wind F1. In other words, the lid housing opening 98a is in the open state to the inverter lid 95. When the inverter lid 95 is opened in a state where the propeller wind F1 is generated by the flight of the eVTOL 10 or the like, the inverter lid 95 is pushed downwind by the propeller wind F1 and is housed in the inverter lid housing 98 through the lid housing opening 98a.

As shown in FIG. 4, in a state where the inverter lid 95 is opened, outside air easily flows into the inverter space 90a through the inverter opening 92 as a cooling air F2. In the inverter space 90a, heat is easily transferred from the inverter high-voltage unit 86 and the inverter low-voltage unit 87 is to the cooling air F2. Then, the cooling air F2 in a heat-transferred state flows out of the inverter opening 92 to the outside, dissipating heat from the inverter high-voltage unit 86 and the inverter low-voltage unit 87 to the outside.

In FIG. 2, in the propulsion device 100, at least part of the motor device 60 generates heat as the motor 61 is driven. At least part of the motor device 60 corresponds to a drive-heat generating device that generates heat as the motor 61 is driven. The drive-heat generating device includes the motor 61. For example, the drive-heat generating device includes the motor stator 62 and the motor rotor 63. In the motor 61, the motor stator 62 and the motor rotor 63 generate heat when the motor current flows through the motor coils and other parts. In the motor device 60, the higher the motor current is, a greater amount of heat is likely to be generated by the motor 61. The drive-heat generating device includes the parts of the motor device 60 that are most likely to generate heat, the parts that are most likely to have high temperature, the parts that are most vulnerable to heat, and the like.

Note that, in the motor device 60, at least part of the motor 61 may generate heat as the motor 61 is driven. In such configuration, at least part of the motor 61 corresponds to a drive-heat generating device. Further, in the motor 61, at least part of the motor stator 62 and at least part of the motor rotor 63 may generate heat as the motor 61 is driven. In such configuration, at least part of the motor stator 62 and at least part of the motor rotor 63 correspond to a drive-heat generating device.

The motor housing 70 houses the motor 61 as the drive-heat generating device. The motor housing 70 corresponds to a drive housing. The motor housing 70 has a motor outer wall 71. The motor outer wall 71 forms the outer and inner surfaces of the motor housing 70. The motor outer wall 71 is formed of a metallic material or the like. The motor outer wall 71 houses the motor 61.

The motor device 60 has a motor vent 73 and a motor vent filter 73a. The motor vent 73 is located on the outer surface of the motor outer wall 71. The motor vents 73 are formed by vent holes in the motor outer wall 71. The vent holes penetrate the motor outer wall 71 in the radial direction RD and the axial direction AD. The motor vent 73 opens the motor space 70a to the outside of the motor outer wall 71. In the motor device 60, the motor space 70a is vented through the motor vent 73. The motor vent 73 corresponds to a housing vent.

A plurality of motor vents 73 are provided in the motor device 60. For example, two motor vents 73 are aligned in the circumferential direction CD or in the axial direction AD through the motor 61. In such configuration, when outside air flows into the motor space 70a from at least one of the motor vents 73 and flows out of the motor housing 70 from the other one of the motor vents 73, heat from the motor 61 is easily transferred to that outside air. The outside air is air or other gases. The gas in the motor space 70a, along with the heat, flows out through the motor vent 73 to dissipate heat of the motor 61.

The motor vent filter 73a regulates foreign matter from entering the motor space 70a through the motor vent 73. The motor vent filter 73a corresponds to a foreign matter regulator. The motor vent filter 73a is formed in the form of a sheet, and the motor vent filter 73a is fixed to the motor outer wall 71 in a state of covering the motor vent 73. The motor vent filter 73a is fixed to the outer or inner surface of the motor outer wall 71. The motor vent filter 73a is provided for each of the multiple motor vents 73.

The motor outer wall 71 is provided with a motor opening 72. The motor opening 72 is an opening formed in the motor outer wall 71. The motor opening 72 is located in a position opposite to at least part of the motor 61. In other words, the motor opening 72 is located in a position that allows at least part of the motor 61 to be exposed to the outside of the motor housing 70. For example, the motor opening 72 is located in line with at least part of the motor 61 in the radial direction RD. Note that the motor opening 72 may be located in a position that is displaced in the axial direction AD relative to the motor 61. The motor opening 72 leads to motor space 70a. An opening area size of the motor opening 72 is larger than an opening area size of the motor vent 73. The motor opening 72 corresponds to a housing opening.

The motor opening 72 is aligned with the motor vent 73 and the motor vent filter 73a along the outer surface of the motor outer wall 71. The motor opening 72 is located away from the motor vent 73 and the motor vent filter 73a in a direction that the outer surface of the motor outer wall 71 extends. The motor vent filter 73a does not cover the motor opening 72.

A plurality of motor openings 72 are provided in the motor outer wall 71. The plurality of motor openings 72 includes a first motor opening 721 and a second motor opening 722. The first motor opening 721 and the second motor opening 722 are aligned in the radial direction RD through the motor 61. For example, the first motor opening 721 and the second motor opening 722 are aligned in the radial direction RD through the motor axis Cm. The first motor opening 721 corresponds to a first opening and the second motor opening 722 corresponds to a second opening.

The motor device 60 includes a motor lid 75, a motor lid retainer 76, a motor retainer drive device 77, and a motor lid housing 78. The motor lid 75, the motor lid retainer 76, the motor retainer drive device 77, and the motor lid housing 78 are provided for the motor opening 72. For example, the motor lid 75, the motor lid retainer 76, the motor retainer drive device 77, and the motor lid housing 78 are provided for each of the first motor opening 721 and the second motor opening 722. Note that the configuration regarding the motor lid 75 is similar to the configuration regarding the inverter lid 95 shown in FIGs. 3 and 4. The configuration regarding the motor lid 75 is not shown in the drawing.

The motor lid 75 is a lid that covers the motor opening 72. The motor lid 75 is formed of a metallic material or the like. The motor lid 75 can open the motor opening 72. The motor lid 75 can transition between an open state for opening the motor opening 72 and a closed state for closing the motor opening 72. The motor lid 75 corresponds to a housing lid.

The motor lid retainer 76 holds the motor lid 75 in the closed state The motor lid retainer 76 is formed of a metallic material or the like. The motor lid retainer 76 is displaceable between a hold position and a release position. The motor lid retainer 76 holds the motor lid 75 in the closed state when in the hold position. The motor lid retainer 76 moves the motor lid 75 to the open state by displacing it to the release position. The release position is for releasing the retention of the motor lid 75 by the motor lid retainer 76.

The motor lid retainer 76 is in a hold state by being in the hold position. The motor lid retainer 76 is in a released state by being in the release position. The motor lid retainer 76 is capable of transitioning between a hold state and a released state. The released state is a state for releasing the retention of the motor lid 75 by the motor lid retainer 76. The motor lid retainer 76 corresponds to a lid retainer.

The motor lid retainer 76 detachably fixes the motor lid 75 to the motor outer wall 71. When the motor lid retainer 76 is in the hold position, the motor lid 75 is in the closed state by being fixed to the motor outer wall 71 by the motor lid retainer 76. When the motor lid retainer 76 is in the release position, the motor lid 75 is in the open state by being detached from the motor outer wall 71. The motor lid retainer 76 corresponds to a lid retainer.

When the motor lid 75 is in the open state, at least part of the motor 61 is exposed to the outside of the motor housing 70 through the motor opening 72. In such case, the motor opening 72 allows ventilation of the motor space 70a, and heat from the motor 61 is easily dissipated to the outside through the motor opening 72. The heat dissipation effect by the motor opening 72 is higher than that by the motor vent 73. The reasons for such effect include the fact that the motor opening 72 is configured in such a way that a ventilation amount of the motor opening 72 is likely to be greater than a ventilation amount of the motor vent 73. The configuration regarding the above includes: an opening area size of the motor opening 72 is greater than an opening area size of the motor vent 73, and the motor vent filter 73a is not provided in the motor opening 72.

When the motor lid 75 is in the open state at both of the first motor opening 721 and the second motor opening 722, the motor space 70a is more easily vented than when the motor lid 75 is in the open state at only one of them. For example, outside air can easily flow in through one of the motor openings 721 and 722, and the outside air can easily flow out through the motor space 70a from the other of the motor openings 721 and 722. In other words, outside air easily passes through the motor housing 70.

The motor retainer drive device 77 is a drive unit for opening and closing the motor lid 75. The motor retainer drive device 77 comprises an actuator such as an electric motor. The motor retainer drive device 77 is fixed to the motor housing 70. The motor retainer drive device 77 drives to displace the motor lid retainer 76. The motor retainer drive device 77 displaces the motor lid retainer 76 from the hold position to the release position, thereby transitioning the motor lid 75 from the closed state to the open state. The motor retainer drive device 77 corresponds to a retainer drive device.

The motor retainer drive device 77 is communicably connected to the flight control device 40. The motor retainer drive device 77 is driven in response to signals from the flight control device 40. The motor retainer drive device 77 may be communicably connected to the inverter control unit 81.

The motor lid housing 78 is located on an outside of the motor outer wall 71. The motor lid housing 78 can house the motor lid 75, which is detached from the motor outer wall 71. The motor lid housing 78 has a lid housing opening, which is not shown in the drawing. The lid housing opening is an opening that opens an internal space of the motor lid housing 78. The motor lid 75, when detached from the motor outer wall 71 during transitioning to the open state, enters the lid housing opening to be housed in the motor lid housing 78.

The motor lid housing 78 is located on a downwind side of the propeller wind F1 with respect to the motor lid 75 in the closed state. The motor lid housing 78 is aligned in the axial direction AD with the motor lid 75. The lid housing opening is opened toward an upwind side of the propeller wind F1. In other words, the lid housing opening opens toward the motor lid 75. When the motor lid 75 is opened in a state where the propeller wind F1 is generated by the flight of the eVTOL 10, or the like, the motor lid 75 is pushed downwind by the propeller wind F1 and is housed in the motor lid housing 78 through the lid housing opening.

In the state where the motor lid 75 is opened, outside air easily flows into the motor space 70a through the motor opening 72 as cooling air. In the motor space 70a, heat from the motor 61 is easily transferred to the cooling air. Then, the cooling air in a heat-transferred state flows out of the motor opening 72 to the outside, dissipating heat from the motor 61 to the outside.

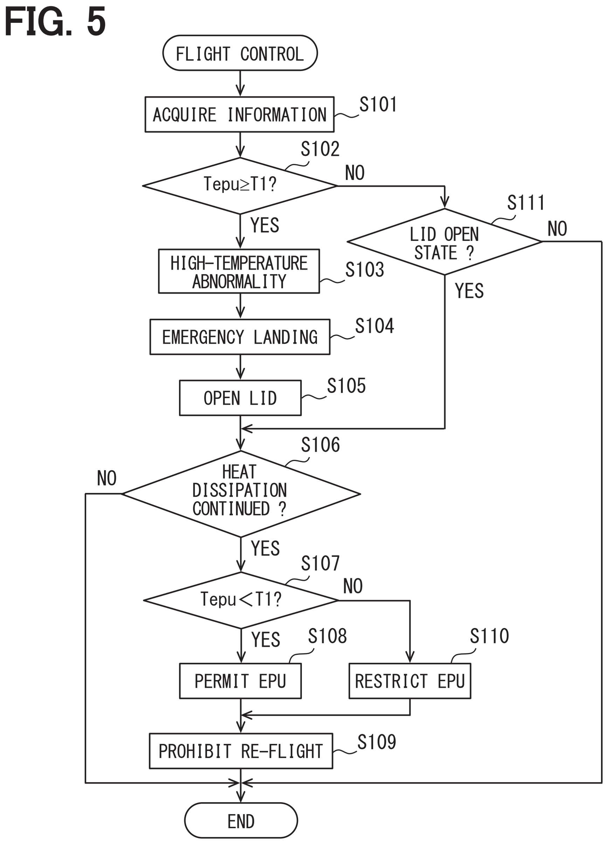

The flight control device 40 performs a flight control process. The flight control process will be described with reference to a flowchart of FIG. 5. The flight control device 40 repeatedly performs the flight control process at a predetermined control cycle. The flight control device 40 performs the flight control process for each of the multiple propulsion devices 100.

In step S101 shown in FIG. 5, the flight control device 40 acquires eVTOL information. The eVTOL information is information indicating a state of the eVTOL 10. The eVTOL information includes information indicating a flight state of the eVTOL 10, information indicating a state of the propulsion device 100, and the like. The information indicating the state of the propulsion device 100 includes information indicating a drive state of the motor 61, information indicating a drive state of the retainer drive devices 77 and 97, and the like. Further, the eVTOL information includes information input from an external device to the flight control device 40 via the communication unit 34, and the like.

In step S102, the flight control device 40 determines whether the EPU temperature Tepu has reached a first temperature threshold value T1. The flight control device 40 acquires the EPU temperature Tepu using the detection signal of the temperature sensor 55. The EPU temperature Tepu is temperature of the drive-heat generating device, such as the motor 61, the inverter high-voltage unit 86, the inverter low-voltage unit 87 and the like. The temperature sensor 55 is located at a position where the temperature of the motor 61, the temperature of the inverter high-voltage unit 86, and the temperature of the inverter low-voltage unit 87 are detectable. For example, the temperature sensor 55 is provided for each of the motor 61, the inverter high-voltage unit 86, and the inverter low-voltage unit 87. Further, the flight control device 40 acquires, as the EPU temperature Tepu, the highest temperature among the temperature of the motor 61, the temperature of the inverter high-voltage unit 86, and the temperature of the inverter low-voltage unit 87.

Note that the flight control device 40 may acquire the EPU temperature Tepu in any manner. For example, the flight control device 40 may calculate, as the EPU temperature Tepu, an average temperature among the temperature of the motor 61, the temperature of the inverter high-voltage unit 86, and the temperature of the inverter low-voltage unit 87. Further, the flight control device 40 may also acquire, as the EPU temperature Tepu, the temperature of the parts that are most likely to generate heat, the temperature of the parts that are most likely to have high temperature, or the temperature of the parts that are most vulnerable to heat, in the drive-heat generating device.
when the EPU temperature Tepu reaches the first temperature threshold value T1, the flight control device 40 determines that a high-temperature abnormality has occurred in the drive-heat generating device such as the motor 61, inverter high-voltage unit 86, inverter low-voltage unit 87 and the like. A high-temperature abnormality is an abnormality in which the temperature of the drive-heat generating device becomes too high. The high-temperature abnormality is also an abnormality that indicates that the drive-heat generating device is overheated, and is sometimes referred to as an overheat abnormality. The high-temperature abnormality is an abnormality caused by the EPU temperature Tepu reaching the first temperature threshold value T1. In other words, a high-temperature abnormality is an abnormality that includes the drive-heat generating device reaching the first temperature threshold value T1. Note that the high-temperature abnormality may include other events or abnormality caused by the drive-heat generating device reaching the first temperature threshold value T1 or other factors. Other events or abnormality include an excessively-large motor current, such as reaching a predetermined current, or the drive-heat generating device reaching a second temperature threshold value T2 described below.

The first temperature threshold value T1 is a threshold value for determining whether the temperature of the drive-heat generating device has reached high temperature, which is sufficiently high to indicate abnormality. The first temperature threshold value T1 is a value predetermined by testing or other means and stored in the memory 43 or the like. The first temperature threshold value T1 corresponds to a predetermined temperature. The first temperature threshold value T1 is also a threshold value for determining whether to make an emergency landing of the eVTOL 10. The first temperature threshold value T1 is also a threshold value for determining whether the motor lid retainer 76 or the inverter lid retainer 96 should be transitioned to the released state. The first temperature threshold value T1 corresponds to a release temperature. The function that performs the process of step S102 in the flight control device 40 corresponds to a high temperature determination unit.

When the EPU temperature Tepu has reached the first temperature threshold value T1, the flight control device 40 proceeds to step S103. The flight control device 40 performs a high-temperature abnormality process in step S103. The high-temperature abnormality process includes a process (a) to report that a high-temperature abnormality has occurred in the motor 61, the inverter high-voltage unit 86, and the inverter low-pressure section 87, (b) to record in the memory 43 or the like that a high-temperature abnormality has occurred, and the like.

The flight control device 40 performs an emergency landing process in step S104. The emergency landing process is a process to perform an emergency landing of the eVTOL10. For example, the flight control device 40 performs a process to change a flight route to a destination, a process to land the eVTOL 10 at an emergency landing site different from the destination, and the like. The flight control device 40 also performs a process for the continuation of the flight of the eVTOL 10 to a destination or to an emergency landing site. The emergency landing process is used to safely evacuate the eVTOL10 to the destination or the emergency landing site. In other words, the emergency landing process is used to evacuate the eVTOL10 to a safe state.

The flight control device 40 performs a lid open process in step S105. The lid open process is a process to open the motor lid 75 and the inverter lid 95. The flight control device 40 drives the motor retainer drive device 77 so that the motor lid 75 is opened. For example, the flight control device 40 opens the motor lid 75 for both of the first motor opening 721 and the second motor opening 722. The flight control device 40 also drives the inverter retainer drive device 97 so that the inverter lid 95 is opened. For example, the flight control device 40 opens the inverter lid 95 for both of the first inverter opening 921 and the second inverter opening 922 in each of the first inverter device 801 and the second inverter device 802. Further, in the lid open process, an open flag is set in the memory 43 or the like devices to indicate that the motor lid 75 or the inverter lid 95 has been opened.

The flight control device 40 releases fixing of the motor lid 75 by the motor lid retainer 76 by driving the motor retainer drive device 77 so that the motor lid retainer 76 transitions to the released state. The flight control device 40 also releases fixing of the inverter lid 95 by the inverter lid retainer 96 by driving the inverter retainer drive device 97 so that the inverter lid retainer 96 transitions to the released state. The function of performing the process of step S105 in the flight control device 40 and the inverter retainer drive device 97 correspond to a lid releaser. The function of performing the process of step S105 in the flight control device 40 corresponds to a release execution unit.

When the motor lid 75 is opened by the lid open process, the motor 61 is directly cooled by cooling air, and the like that flows in through the motor opening 72. In such case, the temperature of the motor 61 easily lowers because a ventilation amount in the motor space 70a increases rapidly due to the opening of the motor opening 72. In other words, the EPU temperature Tepu easily lowers due to the opening of the motor lid 75. When the inverter lid 95 is opened by the lid open process, the inverter high-voltage unit 86 and the inverter low-voltage unit 87 are directly cooled by the cooling air F2, and the like, flowing in from the inverter opening 92. In such case, the temperature of the inverter high-voltage unit 86 and the inverter low-voltage unit 87 can easily be lowered because the ventilation amount of the inverter space 90a increases rapidly due to the opening of the inverter opening 92. In other words, the EPU temperature Tepu easily lowers due to the opening of the inverter lid 95.

In step S106, the flight control device 40 determines whether the heat dissipation of the propulsion device 100 by the lid open process is continued. For example, the flight control device 40 measures an elapsed time since the high-temperature abnormality process is started, and determines when the elapsed time has reached a threshold time. The threshold time is a time predetermined by testing or other means, and stored in the memory 43 or the like. The threshold time is set to a time required for the EPU temperature Tepu to lower after the motor lid 75 or inverter lid 95 is opened.

When the heat dissipation of the propulsion device 100 by the lid open process is continued, the flight control device 40 proceeds to step S107. In step S107, the flight control device 40 determines whether the EPU temperature Tepu is lower than the first temperature threshold value T1. The EPU temperature Tepu lowers than the first temperature threshold value T1 (i) when the motor lid 75 or the inverter lid 95 is opened normally, or (ii) when an amount of heat generated in the drive-heat generating device is not too much.

On the other hand, a state in which the EPU temperature Tepu is not lower than the first temperature threshold value T1 includes (i) when the motor lid 75 or the inverter lid 95 is not opened properly, (ii) when the amount of heat generated in the drive-heat generating device is too much, and the like. A state in which the motor lid 75 or the inverter lid 95 is not opened properly includes (i) when the motor retainer drive device 77 is not driven properly, (ii) when the motor lid retainer 76 is not displaced to the release position P2 because a foreign object is caught in the motor lid retainer 76 and the like.
when the EPU temperature Tepu is lower than the first temperature threshold value T1, the flight control device 40 proceeds to step S108. The flight control device 40 performs an EPU permission process in step S108. The EPU permission process is a process to permit the drive of the EPU 50 until the emergency landing of the eVTOL 10 is complete. The flight control device 40 makes an emergency landing of the eVTOL 10 by driving each of the propulsion device(s) 100 not having a high-temperature abnormality and the propulsion device(s) 100 having a high-temperature abnormality.

The flight control device 40 performs a re-flight prohibition process in step S109. The re-flight prohibition process is used to prohibit the eVTOL 10 from flying again. A re-flight means that the eVTOL10 takes off and begins a flight again when the eVTOL10 makes an emergency landing and completes its current flight. For example, the flight control device 40 sets a prohibition flag in the memory 43, or the like to prohibit the eVTOL 10 from flying again. The flight control device 40 restricts the eVTOL 10 from flying again by setting the prohibition flag. The re-flight prohibition process includes a process of restricting operations to re-fly the eVTOL 10, a process of restricting the propulsion device 100 from being driven after an emergency landing of the eVTOL 10, and the like. The flight control device 40 restricts a takeoff of the eVTOL 10 by restricting the re-flight of the eVTOL 10. The function of the flight control device 40 executing the process of step S109 corresponds to a takeoff restrictor.

Regarding step S107, if the EPU temperature Tepu is not lower than the first temperature threshold value T1, the flight control device 40 proceeds to step S110. The flight control device 40 performs an EPU restricting process in step S110. The EPU restricting process is used to restrict the drive of the EPU 50. For example, the flight control device 40 prohibits a drive of the EPU 50. The flight control device 40 stops driving the propulsion device 100 having the high-temperature abnormality, and drives the propulsion device 100 without the high-temperature abnormality to make an emergency landing of the eVTOL 10. The flight control device 40 performs processes including, for example, a process that adjusts the output of the propulsion device 100 not having the high-temperature abnormality to compensate for the output of the propulsion device 100 having the high-temperature abnormality, and the like. The function of performing the process of step S110 in the flight control device 40 corresponds to a drive stop unit.

Regarding step S102, when the EPU temperature Tepu has not reached the first temperature threshold value T1, the flight control device 40 proceeds to step S111. In step S11, the flight control device 40 determines whether the motor lid 75 or the inverter lid 95 is in the open state. For example, the flight control device 40 determines whether the open flag is set. When the open flag is set, the flight control device 40 determines that the motor lid 75 or the inverter lid 95 is in the open state. Note that the flight control device 40 may acquire the open state of the motor lid 75 and the inverter lid 95 (i) by acquiring an operation history of the motor retainer drive device 77 and the inverter retainer drive device 97, (ii) by detecting a position of the motor lid retainer 76 and the inverter lid retainer 96, and the like.

A state in which the motor lid 75 or the inverter lid 95 is in the open state includes a case when the EPU temperature Tepu is lower than the first temperature threshold value T1 due to the opening of the motor lid 75 or the inverter lid 95 after the high-temperature abnormality in the drive-heat generating device has occurred. When the motor lid 75 or the inverter lid 95 is in the open state, the flight control device 40 proceeds to steps S106 - S108, and performs the EPU permission process in step S108.

According to the embodiment described so far, due to release of the retention of the lids 75, 95 by the lid retainers 76, 96 when having a high-temperature abnormality in the drive-heat generating device such as the motor 61, the inverter high-voltage unit 86, and the inverter low-voltage unit 87. In such configuration, when the drive-heat generating device has high temperature to interfere with the drive of the motor 61, the lids 75, 95 are opened, allowing outside air such as the cooling air F2 and the like to flow in through the openings 72, 92. In such manner, direct cooling of the drive-heat generating device by outside air flowing in through the openings 72, 92 is achieved. Therefore, (a) an immediate stop of the drive of the motor 61 due to an excessively high temperature of the drive-heat generating device, and (b) reducing the degree of freedom regarding the drive of the motor 61 as the temperature of the drive-heat generating device rises are preventable. Thus, even when a high-temperature abnormality is caused in the drive-heat generating device, it is possible to continue driving of the motor 61 until the eVTOL10 is evacuated to a safe state. As described above, the safety of the eVTOL10 can be ensured even when an abnormality occurs in the propulsion system 30.

A state in which the degree of freedom regarding the drive of the motor 61 lowers as the temperature of the drive-heat generating device rises includes a case in which the motor output is restricted, and the like. In the motor 61, it is assumable that the hotter the drive-heat generating device becomes, the more difficult it is for the motor current to flow, thereby lowering the motor output. When the motor output lowers in such manner, there is concern that the motor output will become insufficient for the flight of the eVTOL 10. In contrast, in the present embodiment, due to lowering of the temperature of the drive-heat generating device by the improved cooling effect associated with the opening of the lids 75, 95, the motor current flows with ease, preventing the motor output from decreasing. Thus, the degree of freedom regarding the drive of the motor 61 is suppressible, thereby preventing the motor output from being insufficient for the flight of the eVTOL 10.

According to the present embodiment, the flight control device 40 drives the retainer drive devices 77, 97 so that the lid retainers 76, 96 transition to the released state, when a high-temperature abnormality occurs in the drive-heat generating device. In such configuration, the flight control device 40 can accurately manage an opening timing of the lids 75, 95, and the like. Therefore, the improvement of cooling effect by opening the lids 75, 95 can be effectively implemented for handling the high-temperature abnormality in the drive-heat generating device.

According to the present embodiment, when the EPU temperature Tepu reaches the first temperature threshold value T1, the flight control device 40 drives the retainer drive devices 77, 97 so that the lid retainers 76, 96 transition to the released state, assuming that a high-temperature abnormality of the drive-heat generating device has occurred. In such configuration, the lids 75, 95 are prevented from opening even though the EPU temperature Tepu has not yet reached the first temperature threshold value T1. In other words, it is possible to suppress the opening of the lids 75, 95 in a state in which no high-temperature abnormality is caused in the drive-heat generating device. Therefore, foreign matter is prevented from entering the inside of the housings 70, 90 through the openings 72, 92 due to opening of the lids 75 and 95, when no high-temperature abnormality is caused in the drive-heat generating device.

Further, in such configuration, the lids 75, 95 can be opened only when the predetermined condition that the EPU temperature Tepu reaches the first temperature threshold value T1 is satisfied. Therefore, the drive-heat generating device can be cooled by outside air as intended by designers and pilots.

According to the present embodiment, the second motor opening 722 is provided at (a) a position where the drive-heat generating device such as the motor 61 can be exposed outside the motor housing 70 and (b) a position which is aligned with the first motor opening 721 in the radial direction RD. In such configuration, both of the first motor opening 721 and the second motor opening 722 are opened, making it easier for the outside air, such as cooling air, to hit the drive-heat generating device, for example, thereby improving the cooling effect of the drive-heat generating device by the outside air. Further, the second inverter opening 922 is provided at a position where (a) the drive-heat generating device such as the inverter high-voltage unit 86 and the inverter low-voltage unit 87 can be exposed to the outside of the inverter housing 90, and (b) the first inverter opening 921 is aligned in the radial direction RD with the second inverter opening 922. In such configuration, both of the first inverter opening 921 and the second inverter opening 922 are opened, thereby making it easier for the outside air, such as cooling air, to hit the drive-heat generating device, and causing improvement of the cooling effect for the drive-heat generating device by the outside air.

According to the present embodiment, the motor 61 is configured to be exposed to the outside through the motor opening 72 when retention of the motor lid 75 is released. In such configuration, the outside air flowing in through the motor opening 72 easily hits the motor 61. Therefore, such configuration realizes the improvement of the cooling effect of the motor 61 by the outside air.

According to the present embodiment, the inverter low-voltage unit 87 is provided to be exposed to the outside through the inverter opening 92 when retention of the inverter lid 95 is released. In such configuration, the outside air flowing in through the inverter opening 92 easily hits the inverter low-voltage unit 87. Therefore, such configuration realizes the improvement of the cooling effect of the inverter low-voltage unit 87 by the outside air. Similarly, the inverter high-voltage unit 86 is provided to be exposed to the outside through the inverter opening 92 when retention of the inverter lid 95 is released. In such configuration, the outside air entering through the inverter opening 92 easily hits the inverter high-voltage unit 86. Therefore, such configuration realizes the improvement of the cooling effect of the inverter high-voltage unit 86 by the outside air.

When the high-temperature abnormality occurring in the drive-heat generating device is not resolved despite the improvement of the cooling effect of the drive-heat generating device by the outside air due to opening the lids 75, 95, there is concern that a secondary abnormality due to the high-temperature abnormality may occur in the propulsion device 100. The reason why the high-temperature abnormality in the drive-heat generating device is not resolved even when the lids 75, 95 are opened may be that (a) the drive-heat generating device is not sufficiently cooled by the outside air even when the lids 75, 95 are opened, (b) the amount of heat generated in the drive-heat generating device is too much, and the like.

In contrast, according to the present embodiment, the flight control device 40 stops the drive of the motor 61 when the high-temperature abnormality of the drive-heat generating device continues even after the lids 75, 95 are opened. Therefore, a secondary abnormality is prevented from occurring due to the continuation of the high temperature abnormality in the propulsion device 100. In such manner, a state in which the high-temperature abnormality (a) leading to the secondary anomality and (b) lowering the safety of the eVTOL10 is preventable.

When a high-temperature abnormality occurs in the drive-heat generating device, maintenance of the propulsion device 100 must be performed to prevent the high-temperature abnormality from recurring. In contrast, according to the present embodiment, the flight control device 40 restricts the takeoff of the eVTOL 10 when the lids 75, 95 are opened. Therefore, the eVTOL 10 is prevented from taking off again without maintenance of the propulsion device 100, despite the possibility of a recurrence of the high-temperature abnormality in the drive-heat generating device. Therefore, the occurrence of the high-temperature abnormality in the drive-heat generating device is prevented from affecting the next flight, i.e., preventing the safety of the eVTOL10 during the next flight from deteriorating.

In the propulsion device 100, a high-temperature abnormality of the drive-heat generating device, which requires opening the lids 75, 95, should not basically occur if the EPU 50 is normal. Further, even when the temperature of the drive-heat generating device is quickly lowered by opening the lids 75, 95, there may still be a risk in continuing the use of the EPU 50, because of the exposure of the drive-heat generating device and other parts of the EPU 50 that should basically be sealed from the atmosphere. Therefore, it may be preferable to prohibit the re-flight of the eVTOL10 for guaranteeing an inspection and replacement of the EPU50, though the drive of the EPU 50 is continued by the time when an emergency landing of the eVTOL10 is complete.

For example, in a vehicle such as an electric vehicle moving on the ground as a moving object, in case of having a high-temperature abnormality in the drive-heat generating device, safety of the vehicle and the occupants is securable by stopping the vehicle, even when a propulsion force of the vehicle is insufficient due to stopping of the motor drive. In contrast, a manned aircraft such as the eVTOL10 flying off the ground must avoid a state in which the propulsion force of the manned aircraft is insufficient until the landing is complete to guarantee the safety of the occupant in the event of having a high-temperature abnormality in the drive-heat generating device.

Therefore, as described in the present embodiment, it may be preferable for the eVTOL 10 to prioritize ensuring the safety of the occupants by continuing to drive the motor 61 rather than minimizing abnormality of the motor 61 by stopping the drive of the motor 61 in the event of having a high-temperature abnormality in the drive-heat generating device. It may be a last resort for the motor 61 to continue the drive thereof, despite having a high-temperature abnormality in the drive-heat generating device. However, in the eVTOL 10, by opening the lids 75, 95, the last resort for the motor 61 becomes effectively utilizable.

The propulsion device 100 mounted on the eVTOL 10 is required to have higher output and lighter weight for the purpose of extending the cruising range of the eVTOL 10 and the like. For example, regarding the higher output, tens of kW to hundreds of kW output is required for one propulsion device 100. Regarding the propulsion device 100 of the eVTOL 10, the thermal design is prone to be tighter due to the fact that (a) the drive-heat generating device easily generates heat for higher output and (b) the heat dissipation effect easily lowers for realizing a lighter weight airframe. Further, there is a concern that the propulsion device 100, which has a tight thermal design, may be prone to a high-temperature abnormality in the drive-heat generating device. Therefore, as described in the present embodiment, the lids 75, 95 are opened as a countermeasure against the high-temperature abnormality in the drive-heat generating device, thereby increasing the safety of the eVTOL 10, even when the thermal design of the propulsion device 100 on the eVTOL 10 is tight.

According to the present embodiment, the housings 70, 90 are provided with the vents 73, 93 and the vent filters 73a, 93a in addition to the openings 72, 92. In such configuration, even when the temperature of the drive-heat generating device rises, in case that the temperature is not reaching a threshold of the high-temperature abnormality, the drive-heat generating device can be cooled by ventilation through the vents 73, 93. Therefore, there is no need to open the openings 72, 92 when there is no high-temperature abnormality in the drive-heat generating device. Further, the entry of foreign matter through the vents 73, 93 is regulated by the vent filters 73a, 93a. Therefore, when there is no high-temperature abnormality in the drive-heat generating device, it is possible to suppress the occurrence of abnormality in the propulsion device 100 due to foreign matter entering the inside of the housings 70, 90.

On the other hand, in the event of having a high-temperature abnormality in the drive-heat generating device, a large amount of heat from the drive-heat generating device is releasable to the outside through the openings 72, 92 in addition to vents 73, 93. In such case, by prioritizing (a) a rapid increase of the cooling effect of the drive-heat generating device by the outside air than (b) prevention of entry of foreign matter through the openings 72, 92, a state in which the drive of the motor 61 and the drive-heat generating device is immediately stopped due to the high-temperature abnormality in the drive-heat generating device is preventable.

### <Second Embodiment>

In the second embodiment, the motor current can be restricted when there is no high-temperature abnormality in the drive-heat generating device. Configurations, operations, and effects not particularly described in the second embodiment are the same as those in the first embodiment described above. In the second embodiment, differences from the first embodiment will be mainly described.

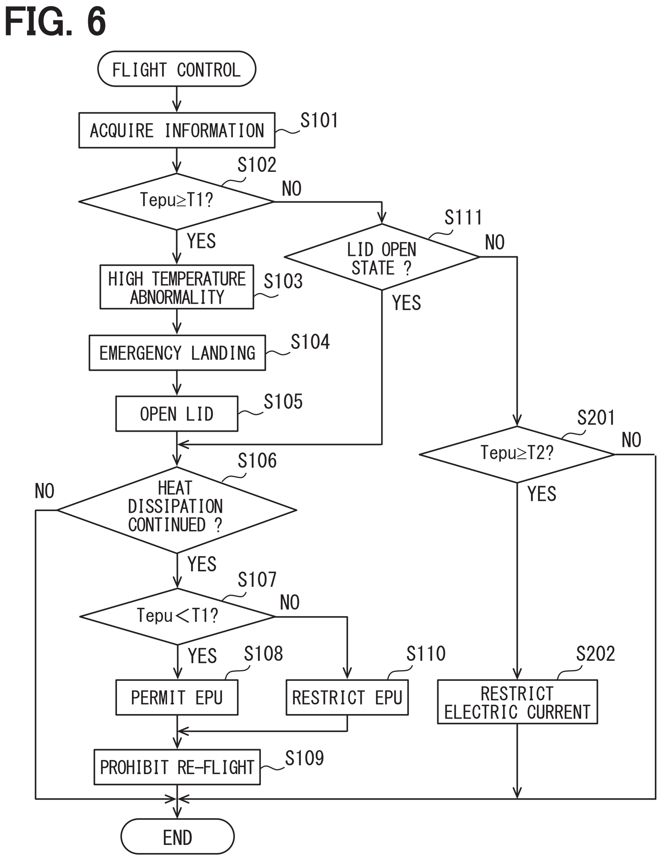

The flight control device 40 performs the flight control process in the same manner as in the first embodiment described above. In the present embodiment, the flight control process is described with reference to the flowchart in FIG. 6. The flight control device 40 performs steps S101 - S111 in the same manner as in the first embodiment described above.

For step S111, when the motor lid 75 or the inverter lid 95 is in the open state, the flight control device 40 proceeds to step S201. In step S201, the flight control device 40 determines whether the EPU temperature Tepu has reached the second temperature threshold value T2. The second temperature threshold value T2 is a value predetermined by testing or other means and stored in the memory 43 or the like. The second temperature threshold value T2 is set to a value indicating a lower temperature than the first temperature threshold value T1. In other words, the first temperature threshold value T1 is a value indicating a higher temperature than the second temperature threshold value T2. The second temperature threshold value T2 is a threshold for determining whether to restrict the motor current to reduce the degree of increase in the EPU temperature Tepu when the EPU temperature Tepu is higher than normal. The second temperature threshold value T2 corresponds to a restriction temperature.

When the EPU temperature Tepu reaches the second temperature threshold value T2, the flight control device 40 proceeds to step S202. The flight control device 40 performs a current restricting process in step S202. The current restricting process is a process to restrict the motor current. For example, the flight control device 40 sets a requested output for the motor 61 to a value that results in a smaller motor current. However, the flight control device 40 performs the current restricting process to prevent the motor current from reaching zero. When the current restricting process is performed, the degree of increase in the EPU temperature Tepu is easily reduced. In such manner, the high-temperature abnormality in the drive-heat generating device is not likely to occur. The process of step S202 in the flight control device 40 corresponds to a current restricting unit.

In the present embodiment, a normal range, a current restricting range, and a high-temperature abnormality range are set for the EPU temperature Tepu. When the EPU temperature Tepu is in the normal range, the flight control device 40 does not perform either the EPU restricting process or the current restricting process. When the EPU temperature Tepu is in the current restricting range, the flight control device 40 performs the current restricting process. When the EPU temperature Tepu is in the high-temperature abnormality range, the flight control device 40 performs the EPU restricting process. The normal range is a range that is lower than the second temperature threshold value T2 for the EPU temperature Tepu. The current restricting range is a range where the EPU temperature Tepu is equal to or higher than the second temperature threshold value T2 and is lower than the first temperature threshold value T1. The high-temperature abnormality range is a range equal to or higher than the first temperature threshold value T1 for the EPU temperature Tepu.

According to the present embodiment, the flight control device 40 restricts the motor current when the EPU temperature Tepu reaches the second temperature threshold value T2. In such configuration, the degree of increase in the EPU temperature Tepu lowers by restricting the motor current, thereby it is less likely that the EPU temperature Tepu, after exceeding the second temperature threshold value T2, further reaches the first temperature threshold value T1. Therefore, the occurrence of the high-temperature abnormality in the drive-heat generating device itself is suppressible.

### <Third Embodiment>

In the first embodiment described above, the flight control device 40 must drive the retainer drive devices 77 and 97 to open the lids 75 and 95. In contrast, the third embodiment does not require the flight control device 40 to drive the retainer drive devices 77, 97 to open the lids 75, 95. Configurations, operations, and effects not particularly described in the third embodiment are the same as those in the first embodiment. In the third embodiment, differences from the first embodiment will be mainly described.

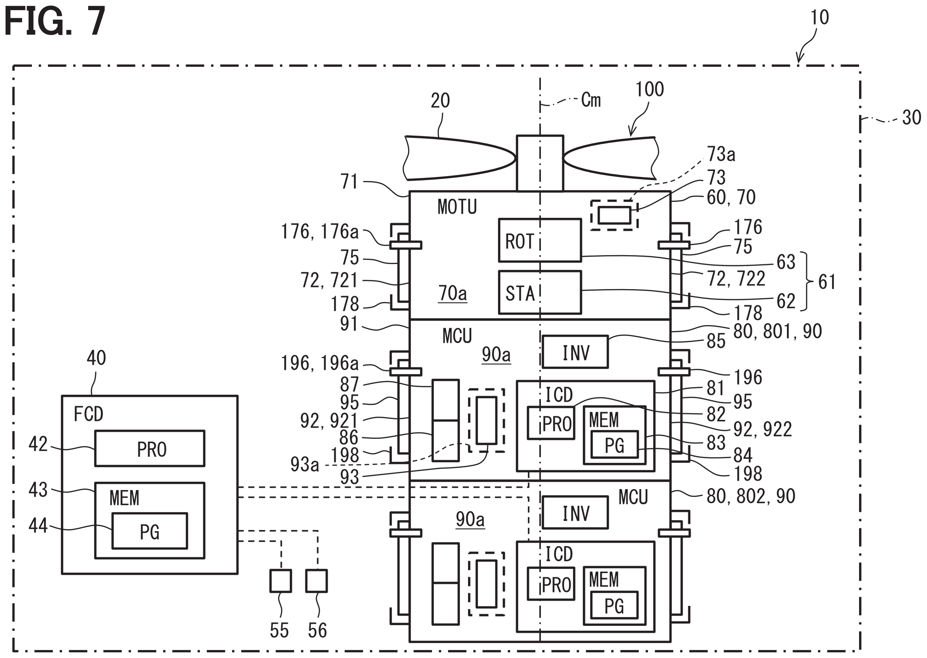

As shown in FIG. 7, the motor device 60 has a motor lid retainer 176 and a motor lid housing 178 instead of the motor lid retainer 76 and motor lid housing 78 of the first embodiment described above. Unlike the first embodiment, the motor device 60 does not have the motor retainer drive device 77. The motor lid retainer 176 and the motor lid housing 178 are provided in the first motor opening 721 and the second motor opening 722, respectively. The motor lid retainer 176 corresponds to a lid retainer.

The inverter device 80 has an inverter lid retainer 196 and an inverter lid housing 198 instead of the inverter lid retainer 96 and the inverter lid housing 98 of the first embodiment described above. Unlike the first embodiment, the inverter device 80 does not have the inverter retainer drive device 97. The inverter lid retainer 196 and the inverter lid housing 198 are provided in each of the first and the second inverter openings 921 and 922, respectively. The inverter lid retainer 196 corresponds to a lid retainer.

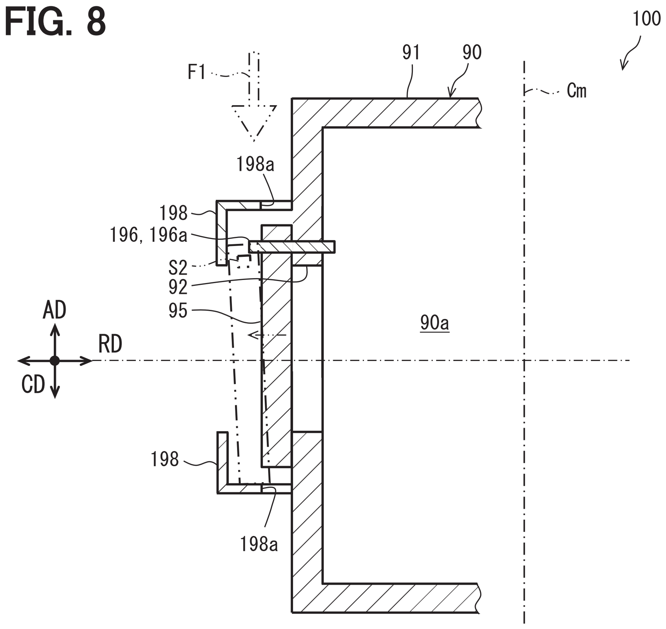

As shown in FIGs. 7 and 8, the inverter lid retainer 196 holds the inverter lid 95 in the closed state The inverter lid retainer 196 can transition between a hold state and a released state, similar to the inverter lid retainer 96 of the first embodiment described above. The inverter lid retainer 196 holds the inverter lid 95 in the closed state when it is in the hold state. The inverter lid retainer 196 transitions the inverter lid 95 to the open state by transitioning itself to the released state. The inverter lid retainer 196 corresponds to a lid retainer.

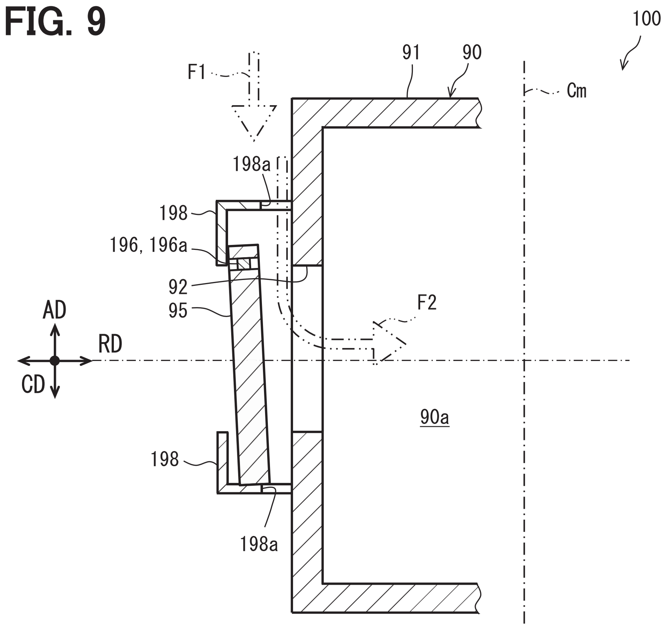

As shown in FIGs. 8 and 9, the inverter lid retainer 196 transitions from the hold state to the released state when at least part of the inverter lid retainer 196 is deformed. The inverter lid retainer 196 is in the hold state by being in a hold shape. The hold shape is a shape that the inverter lid retainer 196 uses to hold the inverter lid 95 in the closed state. The inverter lid retainer 196 holds the inverter lid 95 in the closed state when the retainer 196 is in the hold shape (see FIG. 8). The inverter lid retainer 196 transitions from the hold state to the released state by deforming from the hold shape to a releasing shape. The releasing shape is for the inverter lid retainer 196 to transition the inverter lid 95 from the closed state to the open state. In other words, the releasing shape is for releasing the retention of the inverter lid 95 by the inverter lid retainer 196. The inverter lid retainer 196 transitions the inverter lid 95 to the open state by deforming into the releasing shape (see FIG. 9). The inverter lid retainer 196 corresponds to a lid releaser.

The inverter lid retainer 196 has an inverter deformer 196a. The inverter deformer 196a forms at least part of the inverter lid retainer 196. For example, the inverter deformer 196a forms all of the inverter lid retainer 196. The inverter lid retainer 196 deforms from the hold shape to the releasing shape when at least part of the inverter deformer 196a is deformed. The inverter deformer 196a corresponds to a release deformer. The inverter lid retainer 196 is sometimes referred to as a fusible plug.

The inverter deformer 196a is formed of a metallic material or the like. The heat deformation temperature of the inverter deformer 196a is lower than that of the inverter outer wall 91, the inverter lid 95, and the inverter lid housing 198. The inverter deformer 196a is deformed by melting or other means when heated. Note that in the configuration where the inverter deformer 196a forms a part of the inverter lid retainer 196, the heat deformation temperature of the inverter deformer 196a is lower than that of other parts in the inverter lid retainer 196.

In the inverter device 80, heat from the drive-heat generating device is transferred to the inverter lid retainer 196. In the inverter device 80, when the temperature of the drive-heat generating device has reached high temperature to indicate the high-temperature abnormality, heat transferred to the inverter lid retainer 196 from the drive-heat generating device causes the inverter lid retainer 196 to deform from the hold shape to the releasing shape. In such case, heat from the drive-heat generating device is transferred to the inverter deformer 196a, which deforms at least part of the inverter deformer 196a, causing the inverter lid retainer 196 to deform from the hold shape to the releasing shape. For example, when the EPU temperature Tepu has reached the first temperature threshold value T1, heat from the drive-heat generating device deforms the inverter deformer 196a, causing the inverter lid retainer 196 to deform from the hold shape to the releasing shape. The first temperature threshold value T1 corresponds to a releasing shape temperature.

The inverter lid retainer 196 detachably fixes the inverter lid 95 to the inverter outer wall 91, similar to the inverter lid retainer 96 in the first embodiment described above. When the inverter lid retainer 196 is in the hold shape, the inverter lid 95 is in the closed state by being fixed to the inverter outer wall 91 by the inverter lid retainer 196. When the inverter lid retainer 196 is in the releasing shape, the inverter lid 95 is in the open state by being detached from the inverter outer wall 91.

The inverter lid housing 198 is provided on the outside of the inverter outer wall 91, similar to the inverter lid housing 98 in the first embodiment described above. The inverter lid housing 198 can house the inverter lid 95, which is detached from the inverter outer wall 91. The inverter lid housing 198 is lined up in pairs in the axial direction AD through the inverter opening 92. The inverter lid housing 198 is provided to catch an end of the inverter lid 95 that is detached from the inverter outer wall 91.

The inverter lid housing 198 has a housing vent 198a. The housing vent 198a penetrates the inverter lid housing 198 in the axial direction AD. The housing vent 198a is provided to facilitate the flow of the propeller wind F1 and the cooling air F2 in the axial direction AD. When the inverter lid 95 is opened, one of a pair of inverter lid housings 198 on the upwind side of the propeller wind F1 easily allows the cooling air F2 to pass through the housing vent 198a and to flow into the inverter opening 92.

As shown in FIG. 7, the motor lid retainer 176 holds motor lid 75 in the closed state. The motor lid retainer 176 can transition between the hold state and the released state, similar to the motor lid retainer 76 of the first embodiment described above. The motor lid retainer 176 holds the motor lid 75 in the closed state when the retainer 176 is in the hold state. The motor lid retainer 176 transitions the motor lid 75 to the open state by transitioning itself to the released state. The motor lid retainer 176 is provided in each of the first and the second motor openings 721 and 722, respectively. The motor lid retainer 176 corresponds to a lid retainer.

The motor lid retainer 176 transitions from the hold state to the released state when at least part of the motor lid retainer 176 is deformed. The motor lid retainer 176 is in the hold state by being in the hold shape. The hold shape is a shape of the motor lid retainer 176 to hold the motor lid 75 in the closed state. The motor lid retainer 176 holds the motor lid 75 in the closed state when in the hold state. The motor lid retainer 176 transitions from the hold state to the released state by deforming from the hold shape to the releasing shape. The releasing shape is for the motor lid retainer 176 to transition the motor lid 75 from the closed state to the open state. In other words, the releasing shape is for releasing the retention of the motor lid 75 by the motor lid retainer 176. The motor lid retainer 176 transitions the motor lid 75 to the open state by deforming into the releasing shape. The motor lid retainer 176 corresponds to a lid releaser.

The configuration regarding the motor lid retainer 176 is similar to the configuration regarding the inverter lid retainer 196 shown in FIGs. 8 and 9. The configuration regarding the motor lid retainer 176 is omitted from the drawing.

The motor lid retainer 176 has a motor deformer 176a. The motor deformer 176a forms at least part of the motor lid retainer 176. For example, the motor deformer 176a forms all of the motor lid retainer 176. The motor lid retainer 176 deforms from the hold shape to the releasing shape when at least part of the motor deformer 176a is deformed. The motor deformer 176a corresponds to a release deformer. The motor lid retainer 176 is sometimes referred to as the fusible plug.

The motor deformer 176a is formed of a metallic material or the like. The heat deformation temperature of the motor deformer 176a is lower than that of the motor outer wall 71, the motor lid 75, and the motor lid housing 178. The motor deformer 176a is deformed by melting or other means when heated. Note that, in the configuration where the motor deformer 176a forms a part of the motor lid retainer 176, the heat deformation temperature of the motor deformer 176a is lower than that of other parts in the motor lid retainer 176.

In the motor device 60, heat from the drive-heat generating device is transferred to the motor lid retainer 176. In the motor device 60, when the temperature of the drive-heat generating device has reached high temperature to indicate the high-temperature abnormality, heat transferred to the motor lid retainer 176 from the drive-heat generating device causes the motor lid retainer 176 to deform from the hold shape to the releasing shape. In such case, heat from the drive-heat generating device is transferred to the motor deformer 176a, which deforms at least part of the motor deformer 176a, causing the motor lid retainer 176 to deform from the hold shape to the releasing shape. For example, when the EPU temperature Tepu reaches the first temperature threshold value T1, heat from the drive-heat generating device deforms the motor deformer 176a, causing the motor lid retainer 176 to deform from the hold shape to the releasing shape.

The motor lid retainer 176 detachably fixes the motor lid 75 to the motor outer wall 71, similar to the motor lid retainer 76 in the first embodiment described above. When the motor lid retainer 176 is in the hold shape, the motor lid 75 is in the closed state by being fixed to the motor outer wall 71 by the motor lid retainer 176. When the motor lid retainer 176 is in the releasing shape, the motor lid 75 is in the open state by being detached from the motor outer wall 71.

The motor lid housing 178 is provided on an outside of the motor outer wall 71, similar to the motor lid housing 78 in the first embodiment described above. The motor lid housing 178 can house the motor lid 75, which is detached from the motor outer wall 71. The motor lid housing 178 is lined up in pairs through the motor opening 72. The motor lid housing 178 is provided to catch an end of the motor lid 75 that is detached from the motor outer wall 71.

The motor lid housing 178 has the housing vent not shown. The housing vent penetrates the motor lid housing 178 in the axial direction AD. The housing vent is provided to facilitate flow of the propeller wind F1 and the cooling air F2 in the axial direction AD. When the motor lid 75 is opened, one of the pair of the motor lid housings 178 on an upwind side of the propeller wind F1 allows the cooling air F2 to pass through the housing vent and flow into the motor opening 72.

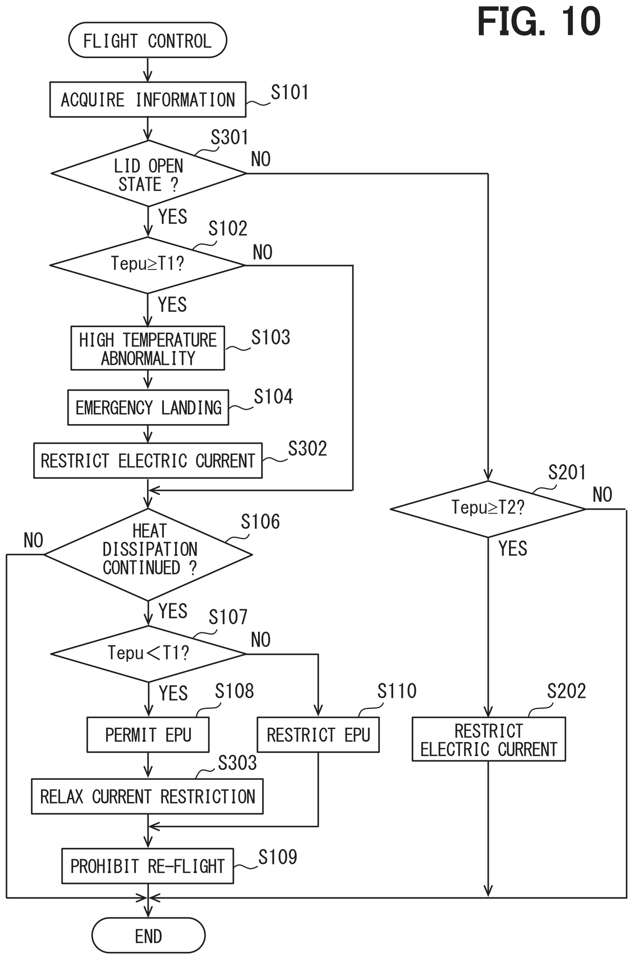

In the present embodiment, the flight control process is described with reference to a flowchart in FIG. 10. The flight control device 40 performs steps S101 - S104 and S106 - S110 in the same manner as in the first embodiment described above. The flight control device 40 performs steps S201 and S202 in the same manner as in the second embodiment described above.

After step S101, the flight control device 40 proceeds to step S301. In step S301, the flight control device 40 determines whether the motor lid 75 or the inverter lid 95 is in the open state. For example, the flight control device 40 uses a detection signal of a lid sensor to determine whether the motor lid 75 or the inverter lid 95 is in the open state. The lid sensor is a sensor that detects a state of the motor lid 75, the inverter lid 95, the motor lid retainer 176, and the inverter lid retainer 196. For example, the lid sensor detects that the motor lid retainer 176 or the inverter lid retainer 196 has been deformed into the releasing shape.

A case in which the motor lid 75 or the inverter lid 95 is in the open state is when a high-temperature abnormality occurs in the drive-heat generating device. For example, in case that a high-temperature abnormality of the motor 61 occurs, heat from the motor 61 causes deformation of the motor deformer 176a due to melting or the like, and the motor lid retainer 176 is deformed into the releasing shape. In such case, fixation of the motor lid 75 by the motor lid retainer 176 is released, and the motor lid 75 is opened. In case that a high-temperature abnormality in the inverter high-voltage unit 86 or in the inverter low-voltage unit 87 occurs, heat from the inverter high-voltage unit 86 or the inverter low-voltage unit 87 causes deformation of the inverter deformer 196a due to melting, and the inverter lid retainer 196 is deformed into the releasing shape. In such case, the inverter lid retainer 196 releases the fixation of the inverter lid 95 and the inverter lid 95 is opened.

When the motor lid 75 or the inverter lid 95 is in the open state, the flight control device 40 performs a notification process. In the notification process, a process to report that the motor lid 75 or the inverter lid 95 is in the open state, a process to record in the memory 43 or the like that the motor lid 75 or the inverter lid 95 is in the open state and the like are performed.

When the motor lid 75 or the inverter lid 95 is in the open state, the flight control device 40 proceeds to step S102 to determine whether the EPU temperature Tepu has reached the first temperature threshold value T1. A state in which the EPU temperature Tepu has not reached the first temperature threshold value T1 even when the lids 75, 95 are in the open state includes a case when the lid retainers 176, 196 are deformed into the releasing shape for unintended reasons or a case when the EPU temperature Tepu lowers due to cooling caused by the opening of the lids 75, 95.

When the EPU temperature Tepu is equal to or higher than the first temperature threshold value T1 in step S102, the flight control device 40 proceeds to step S302 after steps S103 and S104. In step S302, the flight control device 40 performs the current restricting process similar to step S202 of the second embodiment described above. In addition to cooling the drive-heat generating device by opening the lids 75, 95, the flight control device 40 reduces an amount of heat generated in the drive-heat generating device through the current restricting process, thereby creating an environment in which the temperature of the drive-heat generating device can be easily lowered.

The current restricting process in step S302 restricts the motor current more strictly than the current restricting process in step S202. For example, in step S302, the current restricting process is performed so that an amount of reduction in the motor current is greater than the amount of reduction in step S202. Thus, when the EPU temperature Tepu is equal to or higher than the first temperature threshold value T1, the EPU temperature Tepu easily lowers due to the motor current restriction than when the EPU temperature Tepu is lower than the first temperature threshold value T1.

After step S302, when the EPU temperature Tepu is lower than the first temperature threshold value T1 in step S107, the flight control device 40 proceeds to step S303. The flight control device 40 performs the current restriction relaxing process in step S303. In the current restriction relaxing process, restriction of the motor current by the current restricting process is relaxed. The flight control device 40 increases the requested output set in the current restricting process, thereby increasing the motor current compared to the current restricting process, and the like. For example, the flight control device 40 performs the current restriction relaxing process so that the motor current increases as the difference between the EPU temperature Tepu and the first temperature threshold value T1 increases.

When a state where the EPU temperature Tepu is lower than the first temperature threshold value T1 is maintained, the flight control device 40 may set the requested output to a higher value than when no high-temperature abnormality occurs. Further, when the above-described state is maintainable, the flight control device 40 may set the requested output to a higher value than the propulsion device 100 which has no high-temperature abnormality. In such manner, the reduction of the load on the propulsion devices 100 that has no high-temperature abnormality is facilitated. The propulsion device 100 having the high-temperature abnormality will likely be repaired or replaced after the emergency landing of the eVTOL 10 is complete. Therefore, it is preferable to prioritize (a) reducing the burden on the propulsion device 100 that does not have a high-temperature abnormality over (b) reducing the burden on the propulsion device 100 that has a high-temperature abnormality, from a perspective of suppressing the occurrence of abnormality in the propulsion device 100 that does not have a high-temperature abnormality.

When the EPU temperature Tepu has not reached the first temperature threshold value T1 in step S102, the flight control device 40 performs steps S106 - S110 and S303. Thus, even when the EPU temperature Tepu has not reached the first temperature threshold value T1, in case that the motor lid 75 or the inverter lid 95 is in the open state, the flight control device 40 can perform the EPU permission process or the EPU restricting process.

When neither the motor lid 75 nor the inverter lid 95 is in the open state in step S301, the flight control device 40 proceeds to step S201 to determine whether the EPU temperature Tepu has reached the second temperature threshold value T2. The motor lid retainer 176 and inverter lid retainer 196 are not configured to be deformed into the releasing shape, in an event that the EPU temperature Tepu has reached the second temperature threshold value T2 or the like. The flight control device 40 performs the current restricting process of step S202 when the EPU temperature Tepu has reached the second temperature threshold value T2, thereby creating an environment in which it is difficult for the motor lid retainer 176 and the inverter lid retainer 196 to deform into the releasing shape.

According to the present embodiment, the deformers 176a and 196a deform the lid retainers 176 and 196 into the releasing shape by their deforming due to heat of the drive-heat generating device caused by the occurrence of a high-temperature abnormality in the drive-heat generating device. In such configuration, since the lids 75, 95 are opened using the heat generated by the drive-heat generating device, there is no need for the flight control device 40 to manage the opening of the lids 75, 95. Therefore, even when an abnormality in the flight control device 40 occurs in addition to the occurrence of a high-temperature abnormality in the drive-heat generating device, the lids 75, 95 can be opened to improve the cooling effect of the drive-heat generating device by the outside air, without relying on the control of the flight control device 40.

According to the present embodiment, the deformers 176a and 196a are formed such that the EPU temperature Tepu reaches the first temperature threshold value T1 to deform the lid retainers 176 and 196 into the releasing shape. In such configuration, it is less likely that the lids 75, 95 are opened due to deformation of the deformers 176a, 196a even though the EPU temperature Tepu has not reached the first temperature threshold value T1. In other words, it is less likely that the lids 75, 95 are opened due to deformation of the deformers 176a, 196a even though there is no high-temperature abnormality in the drive-heat generating device. Therefore, the deformers 176a and 196a can prevent foreign matter from entering the inside of the housings 70 and 90 through the openings 72, 92 when the lids 75 and 95 are opened when there is no high-temperature abnormality in the drive-heat generating device.

According to the present embodiment, the flight control device 40 restricts the motor current when the EPU temperature Tepu has reached the second temperature threshold value T2 in a state where the lid retainers 176, 196 are not deformed to the releasing shape. In such configuration, the degree of rise of the EPU temperature Tepu lowers by restricting the motor current, thereby making it difficult for the EPU temperature Tepu to rise to the point where the lid retainers 176, 196 deform into the releasing shape after the EPU temperature Tepu exceeds the second temperature threshold value T2. Thus, the lid retainers 176, 196 are prevented from deforming into the releasing shape and opening the lids 75, 95.

### <Fourth Embodiment>

In the fourth embodiment, the first and the second openings are located at different positions in the axial direction AD. Configurations, operations, and effects not particularly described in the fourth embodiment are the same as those of the third embodiment. In the fourth embodiment, differences from the third embodiment will be mainly described.

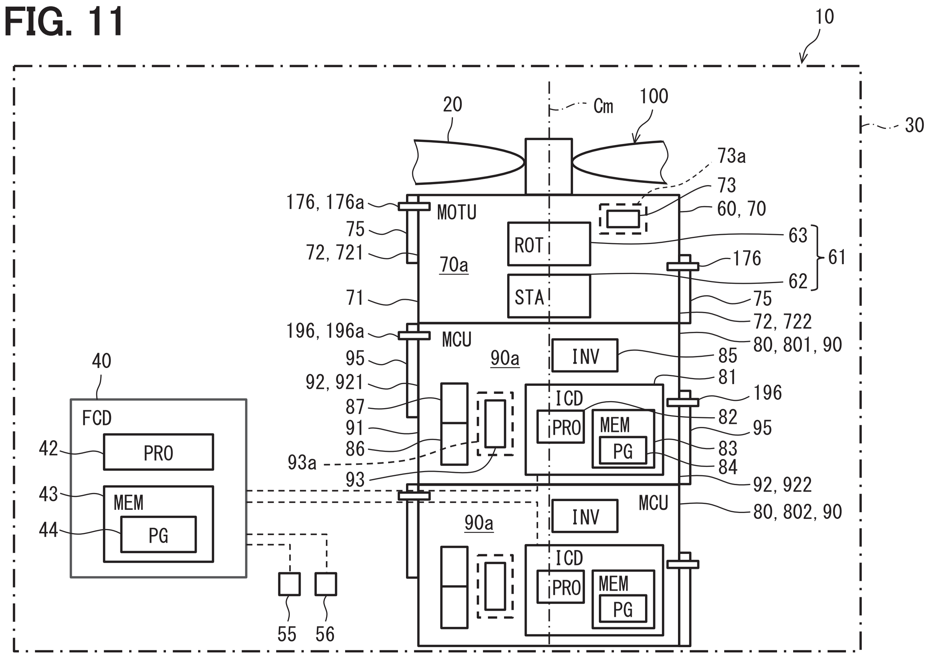

As shown in FIG. 11, in the motor device 60, the position of the first motor opening 721 and the position of the second motor opening 722 are displaced from each other in the axial direction AD. For example, the first motor opening 721 and the second motor opening 722 are aligned in the radial direction RD or in the circumferential direction CD. That is, at least part of the first motor opening 721 and at least part of the second motor opening 722 are aligned in the radial direction RD through the motor 61.

The first motor opening 721 is put at a position displaced from the second motor opening 722 toward the propeller 20. The first motor opening 721 extends toward the propeller 20 than the second motor opening 722. The second motor opening 722 extends toward an opposite side of the propeller 20 than the first motor opening 721.

The first motor opening 721 is put at a position displaced from the second motor opening 722 to the upwind side of the propeller wind F1. With both of the first motor opening 721 and the second motor opening 722 in the open state, the propeller wind F1 easily flows into the first motor opening 721 than into the second motor opening 722. The propeller wind F1 that flows into the motor space 70a through the first motor opening 721 easily flows out of the motor housing 70 through the second motor opening 722.

The motor device 60 has a first rotor and a second rotor as two motor rotors 63. The first and the second rotors are aligned in the axial direction AD through the motor stator 62. The first motor opening 721 is located closer to the first rotor and the second motor opening 722 is located closer to the second rotor. The first motor opening 721 is located in a position that allows at least part of the first rotor to be exposed to the outside of the motor housing 70. The first motor opening 721 is located in line with the first rotor in the radial direction RD. The second motor opening 722 is located in a position that allows at least part of the second rotor to be exposed to the outside of the motor housing 70. The second motor opening 722 is located in line with the second rotor in the radial direction RD.

Note that the first motor opening 721 and the second motor opening 722 need not be aligned in the radial direction RD, as long as their positions are displaced from each other in the axial direction AD. For example, the first motor opening 721 and the second motor opening 722 may be located adjacent to each other in the circumferential direction CD. In such configuration, the motor 61 is not interposed at a position between the first motor opening 721 and the second motor opening 722. The positional relationship in which the first motor opening 721 and the second motor opening 722 are displaced from each other in the axial direction AD includes a positional relationship in which the first motor opening 721 and the second motor opening 722 are aligned in the axial direction AD. In such configuration, the first motor opening 721 and the second motor opening 722 may be displaced from each other in the circumferential direction CD.

In the present embodiment, the motor lid 75 covering the first motor opening 721 and the motor lid 75 covering the second motor opening 722 are at positions displaced from each other in the axial direction AD, due to displacement in the axial direction AD between a position of the first motor opening 721 and a position of the second motor opening 722. The configuration where the first motor opening 721 and the second motor opening 722 are displaced from each other in the axial direction AD may be applied to the first embodiment described above. Further, the motor housing 70 does not have to have the motor lid housing 78, 178.

In the inverter device 80, the first inverter opening 921 and the second inverter opening 922 are located at positions displaced from each other in the axial direction AD. For example, at least part of the first inverter opening 921 and at least part of the second inverter opening 922 are aligned in the radial direction RD or in the circumferential direction CD. For example, at least part of the first inverter opening 921 and at least part of the second inverter opening 922 are aligned in the radial direction RD through the motor 61.

The first inverter opening 921 is displaced from the second inverter opening 922 toward the propeller 20. The first inverter opening 921 extends toward the propeller 20 than the second inverter opening 922. The second inverter opening 922 extends toward an opposite side of the propeller 20 than the first inverter opening 921.

The first inverter opening 921 is displaced from the second inverter opening 922 to the upwind side of the propeller wind F1. With both of the first and the second inverter openings 921 and 922 in the open state, the propeller wind F1 easily flows into the first inverter opening 921 than into the second inverter opening 922. The propeller wind F1 that flows into the inverter space 90a through the first inverter opening 921 easily flows out of the second inverter opening 922 to the outside of the inverter housing 90.

Note that the first and the second inverter openings 921 and 922 need not be aligned in the radial direction RD, as long as their positions are displaced from each other in the axial direction AD. For example, the first inverter opening 921 and the second inverter opening 922 may be located adjacent to each other in the circumferential direction CD. In such configuration, the motor 61 does not enter into a space between the first and the second inverter openings 921 and 922. Further, the configuration in which the first inverter opening 921 and the second inverter opening 922 are displaced from each other in the axial direction AD includes a configuration in which the first inverter opening 921 and the second inverter opening 922 are aligned in the axial direction AD. In such configuration, the first inverter opening 921 and the second inverter opening 922 may be located at positions displaced from each other in the circumferential direction CD.

In such configuration, the first inverter opening 921 and the second inverter opening 922 are displaced from each other in the axial direction AD, so that the inverter lid 95 of the first inverter opening 921 and the inverter lid 95 of the second inverter opening 922 are displaced from each other in the axial direction AD. The configuration in which the first inverter opening 921 and the second inverter opening 922 are displaced from each other in the axial direction AD may be applied to the first embodiment described above. Further, the inverter housing 90 does not have to have the inverter lid housings 98, 198.

According to the present embodiment, the first motor opening 721 and the second motor opening 722 are located at different positions displaced from each other in the axial direction AD. In such configuration, both of the motor openings 721 and 722 are opened, so that outside air such as the propeller wind F1 flowing in the axial direction AD can easily flow in from one of the motor openings 721 and 722, easily pass through the motor space 70a, and easily flow out from the other one of the motor openings 721 and 722. As outside air passes through the motor space 70a, the drive-heat generating device such as the motor 61 is easily cooled by the outside air. In such manner, the outside air can easily pass through the inside of the motor housing 70, thereby enhancing the cooling effect of the drive-heat generating device.

Further, the first inverter opening 921 and the second inverter opening 922 are located at different positions displaced from each other in the axial direction AD. In such configuration, both of the inverter openings 921 and 922 are opened, so that the outside air such as the propeller wind F1 flowing in the axial direction AD can easily flow in from one of the inverter openings 921 and 922, easily pass through the inverter space 90a, and easily flow out from the other one of the inverter openings 921 and 922. As the outside air passes through the inverter space 90a, the drive-heat generating device such as the inverter high-voltage unit 86 and the inverter low-voltage unit 87 are easily cooled by the outside air. In such manner, the outside air can easily pass through the inside of the inverter housing 90, thereby enhancing the cooling effect of the drive-heat generating device.

### <Other Embodiments>

The present disclosure in the specification is not restricted to the embodiments shown as examples. The present disclosure includes embodiments described above and modifications of the above-described embodiments made by a person skilled in the art. For example, the disclosure is not restricted to a combination of components and elements described in the embodiments, and various modifications may be implemented. The present disclosure may be implemented in various combinations thereof. The present disclosure may have additional components that can be added to the embodiments. The present disclosure encompasses the omission of components and elements of the embodiments. The present disclosure encompasses the replacement or combination of components, elements between one embodiment and another embodiment. The disclosed technical scope is not restricted to those described in the embodiments. The disclosed technical scope is indicated by the description of the claims, and should be construed to include all changes within the meaning and range equivalent to the description of the claims.

In each of the embodiments described above, the housing lid such as the motor lid 75 and the inverter lid 95 may be provided on at least one of the motor housing 70 and the inverter housing 90. In such case, at least one of the motor housing 70 and the inverter housing 90 corresponds to a drive housing.

In each of the embodiments described above, the housing lid may be not detachable from the drive housing when the housing opening is opened. In other words, the housing lid does not have to be detachably attached to the drive housing. For example, in the first embodiment described above, the motor housing 70 may have an axial support that rotatably supports the motor lid 75. In such configuration, when the retention of the motor lid 75 by the motor lid retainer 76 is released, the motor lid 75 rotates to the open state.

In each of the embodiments described above, the housing lid may be capable of returning from the open state back to the closed state after transitioning from the closed state to the open state.

In each of the embodiments described above, a labyrinth section forming a labyrinth passage may be provided as a foreign matter regulator such as the motor vent filter 73a or the like. The labyrinth passage is a folded-shaped passage. The labyrinth section is provided so that the labyrinth passage leads to the motor vent 73. For example, the labyrinth section is located outside the motor vent 73. In such configuration, even when foreign matter enters the labyrinth passage along with the outside air, the labyrinth passage regulates the foreign matter from reaching the motor vent 73.

In each of the embodiments described above, the housing lid may be opened in any manner. For example, in the first embodiment described above, the lid open process may open the motor lid 75 for at least one of the first motor opening 721 and the second motor opening 722. In the lid open process, the inverter lid 95 may be opened for at least one of the first inverter opening 921 and the second inverter opening 922. Further, in the lid open process, the inverter lid 95 may be opened for at least one of the first and the second inverter devices 801 and 802. In addition, at least one of the motor lid 75 and the inverter lid 95 may be opened in the lid open process.

In each of the embodiments described above, the housing opening may be provided in the drive housing in any manner. For example, the drive housing should have at least one of the motor opening 72 and the inverter opening 92. In other words, the drive housing may have, from among the motor opening 72 and the inverter opening 92, only the motor opening 72 only the inverter opening 92.

In each of the embodiments described above, the flight control device 40 may acquire, in any manner, that the housing lid has been opened. For example, in the third embodiment described above, the flight control device 40 may use a detection signal of any sensor, or may even use no detection signal, as long as capable of determining that the motor lid 75 or the inverter lid 95 is in the open state. For example, a ventilation amount sensor may be provided in the motor device 60 or the inverter device 80 to detect the ventilation amount of the motor opening 72 or the inverter opening 92. The flight control device 40 determines that the motor lid 75 or the inverter lid 95 has transitioned to the open state when the ventilation amount increases rapidly. Further, the flight control device 40 does not have to acquire that the housing lid has been opened.

In each of the embodiments described above, the release temperature for determining whether to transition the motor lid retainer 76 or other lid retainer to the released state and a permission temperature for determining whether to perform the EPU permission process may be set to different temperatures. Further, the releasing shape temperature for the release deformer such as the motor deformer 176a to deform the lid retainer to the released state and the first temperature threshold value T1 for determining whether a high-temperature abnormality has occurred in the drive-heat generating device may be set to different temperatures.

In each of the embodiments described above, the housing vent, such as the motor vent 73 or the like, may be provided in the drive housing in any manner. For example, the housing vent may be provided on the housing lid. In such configuration, a foreign matter regulator such as the motor vent filter 73a and the like may preferably be provided not to cover the housing opening when the housing lid is in the open state. Further, the housing vent does not have to be provided on the drive housing.

In each of the embodiments described above, the propulsion device 100 may have both of a lid retainer that can be controlled by the flight control device 40 and a lid retainer that cannot be controlled by the flight control device 40. For example, the propulsion device 100 may have both of the motor lid retainer 76 or the inverter lid retainer 96 of the first embodiment described above and the motor lid retainer 176 or the inverter lid retainer 196 of the third embodiment described above.

In each of the embodiments described above, at least a part of the programs stored in the memories 43 and 83 may be rewritten through wireless communication such as OTA. The OTA is an abbreviation of over the air.

In each of the embodiments described above, at least one of the inverter control unit 81 and the flight control device 40 may perform the flight control process. In such configuration, at least one of the inverter control unit 81 and the flight control device 40 corresponds to a propulsion control device. For example, in a configuration where the inverter control unit 81 controls the motor retainer drive device 77 and the inverter retainer drive device 97, at least the inverter control unit 81 corresponds to a propulsion control device. In such configuration, when the re-flight prohibition process is performed, information indicating that re-flight of the eVTOL 10 is prohibited may preferably be input from the inverter control unit 81 to the flight control device 40.

The propulsion control program may be included in at least one of the programs 44 and 84. Further, at least one processing unit executing the propulsion control program may include at least one of the processors 42 and 82.

In each of the embodiments described above, the vertical takeoff and landing aircraft on which the flight control device 40 is mounted may be an electrically-powered vertical takeoff and landing aircraft, with at least one EPU 50 driving at least one propeller 20. For example, one propeller 20 may be driven by multiple EPUs 50, or multiple propellers 20 may be driven by a single EPU 50.

In each of the embodiments described above, the flight vehicle on which the EPU 50 is mounted may be not the vertical takeoff and landing aircraft as long as it is an electric type. For example, the flight vehicle may be a flight vehicle capable of taking off and landing while gliding, as an example of the electric aircraft. Further, the flight vehicle may be a rotary-wing aircraft, or a fixed-wing aircraft. The flight vehicle may be an unmanned flight vehicle carrying no occupant. The unmanned flight vehicle may or may not include the occupant compartment 14. Further, the pilot may remotely control the flight vehicle. The eVTOL10 may be referred to as a manned flight vehicle when it is not manned, as long as it is capable of carrying an occupant.

In each of the embodiments described above, the moving object on which the EPU 50 is mounted may be not a flight vehicle as long as the moving object is movable by rotation of a rotating object. For example, the moving object may be a vehicle, a ship, a construction machine, or an agricultural machine. For example, when the moving object is a vehicle, a construction machine, or the like, the rotating object is a wheel or the like for traveling, and an output shaft portion is an axle or the like. When the moving object is a ship, the rotating object is a propulsion-screw propeller or the like, and the output shaft portion is a propeller shaft or the like.

In each of the embodiments described above, the flight control device 40 and the inverter control unit 81 are provided by a control system that includes at least one computer. The control system includes at least one processor that is hardware. When the processor is referred to as a hardware processor, the hardware processor can be implemented by (i), (ii), or (iii) described in the following.
(i) The hardware processor may be a hardware logic circuit. In such case, the computer is implemented by a digital circuit including many programmed logic units (gate circuits). The digital circuit may include a memory in which at least one of a program and data is stored. The computer may be implemented by an analog circuit. The computer may be provided as a combination of a digital circuit and an analog circuit.
(ii) The hardware processor may be at least one processor core that executes a program stored in at least one memory. In such case, the computer includes at least one memory and at least one processor core. The processor core is referred to as a CPU, for example. The memory is also referred to as a storage medium. The memory is a non-transitory, tangible storage medium non-temporarily storing "at least one of a program and data" readable by the processor.
(iii) The hardware processor may be a combination of the hardware logic circuit under item (i) and the processor core under item (ii). The logic circuit (i) and the processor core (ii) are provided on different chips or on a common chip.

In other words, at least one of the means and functions provided by the flight control device 40 or the inverter control unit 81 can be provided by hardware alone, software alone, or a combination thereof.

### (Disclosure of Technical Ideas)

The present disclosure provides multiple technical thoughts described below as multiple items. Some items may be described in a multiple dependent form with subsequent items referring to the preceding item in alternative form. Further, some items may be described in a multiple dependent form referring to another multiple dependent form. These items described in a multiple dependent form define multiple technical ideas.

### (Technical idea 1)

A propulsion system (30) is configured to propel a moving object (10). The propulsion system includes: a motor (61) configured to be driven to propel the moving object; a drive-heat generating device (61, 86, 87) configured to generate heat as the motor is driven; a drive housing (70, 90) accommodating the drive-heat generating device; a housing lid (75, 95) capable of opening a housing opening (72, 721, 722, 92, 921, 922) of the drive housing; a lid retainer (76, 96, 176, 196) configured to hold the housing lid in a closed state in which the housing lid covers the housing opening; and a lid releaser (77, 97, 176, 196, S105) configured to release retention of the housing lid by the lid retainer on occurrence of a high-temperature abnormality, the high-temperature abnormality including a state in which temperature of the drive-heat generating device reaches a predetermined temperature (T1).

### (Technical idea 2)

The propulsion system according to technical idea 1, in which the lid releaser includes a retainer drive device (77, 97) configured drive the lid retainer to displace the lid retainer, and a release execution unit (S105) configured to, when the high-temperature abnormality occurs, drive the retainer drive device to transition the lid retainer to be in a released state (P2) in which retention of the housing lid is released.

### (Technical idea 3)

The propulsion system according to technical idea 2, in which the release execution unit is configured to, when temperature of the drive-heat generating device reaches a predetermined release temperature (T1), drive the retainer drive device to transition the lid retainer to be in the released state, on assumption that the high-temperature abnormality occurs.

### (Technical idea 4)

The propulsion system according to technical idea 3, further includes: a current restriction unit (S202) configured to, when temperature of the drive-heat generating device reaches a predetermined restriction temperature (T2), restrict a motor current of the motor, in which the release temperature is higher than the restriction temperature.

### (Technical idea 5)

The propulsion system according to any one of technical ideas 1 to 4, in which at least a part of the lid releaser includes a release deformer (176a, 196a), and the release deformer is configured cause the lid retainer to deform into a releasing shape, due to heat of the drive-heat generating device caused by occurrence of the high-temperature abnormality, to release retention of the housing lid.

### (Technical idea 6)

The propulsion system according to technical idea 5, in which
the release deformer is configured to, when temperature of the drive-heat generating device reaches a predetermined releasing shape temperature (T1), cause the lid retainer to deform into the releasing shape.

### (Technical idea 7)

The propulsion system according to technical idea 6 further including: a current restriction unit (S202) configured to, when temperature of the drive-heat generating device reaches a predetermined restriction temperature (T2), restrict a motor current of the motor, in which the releasing shape temperature is higher than the restriction temperature.

### (Technical idea 8)

The propulsion system according to any one of technical ideas 1 to 7, in which the housing opening includes a first opening (721, 921) at a position that enables to expose at least part of the drive-heat generating device to an outside of the drive housing, a second opening (722, 922) at a position that enables to expose at least part of the drive-heat generating device to an outside of the drive housing and is displaced relative to the first opening in an axial direction (AD) of the motor, and each of the first opening and the second opening is provided with the housing lid, the lid retainer, and the lid releaser.

### (Technical idea 9)

The propulsion system according to any one of technical ideas 1 to 8, in which the drive-heat generating device includes the motor that is configured to be exposed to an outside through the housing opening, when the lid releaser releases retention of the housing lid.

### (Technical idea 10)

The propulsion system according to any one of technical ideas 1 to 9, in which the drive-heat generating device is configured to be exposed to an outside through the housing opening, when the lid releaser releases retention of the housing lid, and the drive-heat generating device includes a control circuit (87) configured to control drive of the motor.

### (Technical idea 11)

The propulsion system according to any one of technical ideas 1 to 10, further including: a drive stop unit (S110) configured to stop drive of the motor, when the high-temperature abnormality continues even after the lid releaser releases retention of the housing lid.

### (Technical idea 12)

The propulsion system according to any one of technical ideas 1 to 11, in which the moving body is a flight vehicle (10) configured to fly by drive of the motor, the propulsion system further including: a takeoff restrictor (S109) configured to restrict takeoff of the flight vehicle, when the lid releaser releases retention of the housing lid.

### (Technical idea 13)

The propulsion system according to any one of technical ideas 1 to 12, further including: a housing vent (73, 93) configured to ventilate gas into an internal space (70a, 90a) of the drive housing; and a foreign matter regulator (73a, 93a) configured to regulate foreign matter from entering the internal space through the housing vent and not to regulate foreign matter from entering the internal space through the housing opening.

### (Technical idea 14)

A propulsion control device (40) is configured to control a propulsion system (30). The propulsion system includes: a motor (61) configured to be driven to propel the moving object; a drive-heat generating device (61, 86, 87) configured to generate heat as the motor is driven; a drive housing (70, 90) accommodating the drive-heat generating device; a housing lid (75, 95) capable of opening a housing opening (72, 721, 722, 92, 921, 922) of the drive housing; a lid retainer (76, 96, 176, 196) configured to hold the housing lid in a closed state in which the housing lid covers the housing opening; and a retainer drive device (77, 97) configured drive the lid retainer to displace the lid retainer. The propulsion control device includes: a high temperature determination unit (S102) configured to determine whether a high-temperature abnormality occurs, the high-temperature abnormality including a state in which temperature of the drive-heat generating device reaches a predetermined temperature (T1); and a release execution unit (S105) configured to, when the high-temperature abnormality occurs, drive the retainer drive device to transition the lid retainer to be in a released state (P2) in which retention of the housing lid is released.

### (Technical idea 15)

A propulsion control program (44) is for controlling a propulsion system (30). The propulsion system includes: a motor (61) configured to be driven to propel the moving object; a drive-heat generating device (61, 86, 87) configured to generate heat as the motor is driven; a drive housing (70, 90) accommodating the drive-heat generating device; a housing lid (75, 95) capable of opening a housing opening (72, 721, 722, 92, 921, 922) of the drive housing; a lid retainer (76, 96, 176, 196) configured to hold the housing lid in a closed state in which the housing lid covers the housing opening; and a retainer drive device (77, 97) configured drive the lid retainer to displace the lid retainer. The program is configured to cause at least one processor (42) to: determine (S102) whether a high-temperature abnormality occurs, the high-temperature abnormality including a state in which temperature of the drive-heat generating device reaches a predetermined temperature (T1); and when the high-temperature abnormality occurs, drive (S105) the retainer drive device to transition the lid retainer to be in a released state (P2) in which retention of the housing lid is released.

## Claims

1. A propulsion system (30) configured to propel a moving object (10), the propulsion system comprising:
a motor (61) configured to be driven to propel the moving object;
a drive-heat generating device (61, 86, 87) configured to generate heat as the motor is driven;
a drive housing (70, 90) accommodating the drive-heat generating device;
a housing lid (75, 95) capable of opening a housing opening (72, 721, 722, 92, 921, 922) of the drive housing;
a lid retainer (76, 96, 176, 196) configured to hold the housing lid in a closed state in which the housing lid covers the housing opening; and
a lid releaser (77, 97, 176, 196, S105) configured to release retention of the housing lid by the lid retainer on occurrence of a high-temperature abnormality, the high-temperature abnormality including a state in which temperature of the drive-heat generating device reaches a predetermined temperature (T1).

2. The propulsion system according to claim 1, wherein
the lid releaser includes
a retainer drive device (77, 97) configured drive the lid retainer to displace the lid retainer, and
a release execution unit (S105) configured to, when the high-temperature abnormality occurs, drive the retainer drive device to transition the lid retainer to be in a released state (P2) in which retention of the housing lid is released.

3. The propulsion system according to claim 2, wherein
the release execution unit is configured to, when temperature of the drive-heat generating device reaches a predetermined release temperature (T1), drive the retainer drive device to transition the lid retainer to be in the released state, on assumption that the high-temperature abnormality occurs.

4. The propulsion system according to claim 3, further comprising:
a current restriction unit (S202) configured to, when temperature of the drive-heat generating device reaches a predetermined restriction temperature (T2), restrict a motor current of the motor, wherein
the release temperature is higher than the restriction temperature.

5. The propulsion system according to any one of claims 1 to 4, wherein
at least a part of the lid releaser includes a release deformer (176a, 196a), and
the release deformer is configured cause the lid retainer to deform into a releasing shape, due to heat of the drive-heat generating device caused by occurrence of the high-temperature abnormality, to release retention of the housing lid.

6. The propulsion system according to claim 5, wherein
the release deformer is configured to, when temperature of the drive-heat generating device reaches a predetermined releasing shape temperature (T1), cause the lid retainer to deform into the releasing shape.

7. The propulsion system according to claim 6 further comprising:
a current restriction unit (S202) configured to, when temperature of the drive-heat generating device reaches a predetermined restriction temperature (T2), restrict a motor current of the motor, wherein
the releasing shape temperature is higher than the restriction temperature.

8. The propulsion system according to claim 1 or 2, wherein
the housing opening includes
a first opening (721, 921) at a position that enables to expose at least part of the drive-heat generating device to an outside of the drive housing,
a second opening (722, 922) at a position that enables to expose at least part of the drive-heat generating device to an outside of the drive housing and is displaced relative to the first opening in an axial direction (AD) of the motor, and
each of the first opening and the second opening is provided with the housing lid, the lid retainer, and the lid releaser.

9. The propulsion system according to claim 1 or 2, wherein
the drive-heat generating device includes the motor that is configured to be exposed to an outside through the housing opening, when the lid releaser releases retention of the housing lid.

10. The propulsion system according to claim 1 or 2, wherein
the drive-heat generating device is configured to be exposed to an outside through the housing opening, when the lid releaser releases retention of the housing lid, and
the drive-heat generating device includes a control circuit (87) configured to control drive of the motor.

11. The propulsion system according to claim 1 or 2, further comprising:
a drive stop unit (S110) configured to stop drive of the motor, when the high-temperature abnormality continues even after the lid releaser releases retention of the housing lid.

12. The propulsion system according to claim 1 or 2, wherein
the moving object is a flight vehicle (10) configured to fly by drive of the motor,
the propulsion system further comprising:
a takeoff restrictor (S109) configured to restrict takeoff of the flight vehicle, when the lid releaser releases retention of the housing lid.

13. The propulsion system according to claim 1 or 2, further comprising:
a housing vent (73, 93) configured to ventilate gas into an internal space (70a, 90a) of the drive housing; and
a foreign matter regulator (73a, 93a) configured
to regulate foreign matter from entering the internal space through the housing vent and not to regulate foreign matter from entering the internal space through the housing opening.

14. A propulsion control device (40) configured to control a propulsion system (30), the propulsion system including: a motor (61) configured to be driven to propel a moving object; a drive-heat generating device (61, 86, 87) configured to generate heat as the motor is driven; a drive housing (70, 90) accommodating the drive-heat generating device; a housing lid (75, 95) capable of opening a housing opening (72, 721, 722, 92, 921, 922) of the drive housing; a lid retainer (76, 96, 176, 196) configured to hold the housing lid in a closed state in which the housing lid covers the housing opening; and a retainer drive device (77, 97) configured drive the lid retainer to displace the lid retainer, the propulsion control device comprising:
a high temperature determination unit (S102) configured to determine whether a high-temperature abnormality occurs, the high-temperature abnormality including a state in which temperature of the drive-heat generating device reaches a predetermined temperature (T1); and
a release execution unit (S105) configured to, when the high-temperature abnormality occurs, drive the retainer drive device to transition the lid retainer to be in a released state (P2) in which retention of the housing lid is released.

15. A propulsion control program (44) for controlling a propulsion system (30), the propulsion system including: a motor (61) configured to be driven to propel a moving object; a drive-heat generating device (61, 86, 87) configured to generate heat as the motor is driven; a drive housing (70, 90) accommodating the drive-heat generating device; a housing lid (75, 95) capable of opening a housing opening (72, 721, 722, 92, 921, 922) of the drive housing; a lid retainer (76, 96, 176, 196) configured to hold the housing lid in a closed state in which the housing lid covers the housing opening; and a retainer drive device (77, 97) configured drive the lid retainer to displace the lid retainer, the program configured to cause at least one processor (42) to:
determine (S102) whether a high-temperature abnormality occurs, the high-temperature abnormality including a state in which temperature of the drive-heat generating device reaches a predetermined temperature (T1); and
when the high-temperature abnormality occurs, drive (S105) the retainer drive device to transition the lid retainer to be in a released state (P2) in which retention of the housing lid is released.
